(19) Europäisches Patentamt / European Patent Office / Office européen des brevets

(11) **EP 1 770 356 A2**

(12) **EUROPEAN PATENT APPLICATION**

(43) Date of publication:
**04.04.2007 Bulletin 2007/14**

(51) Int Cl.:
*G01B 11/25* (2006.01)     *G01C 11/06* (2006.01)
*G06T 7/00* (2006.01)     *H04N 13/00* (2006.01)

(21) Application number: **06020585.3**

(22) Date of filing: **29.09.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **30.09.2005 JP 2005289332**
**30.09.2005 JP 2005289333**

(71) Applicant: **TOPCON CORPORATION**
**Tokyo 174-8580 (JP)**

(72) Inventors:
• **Kochi, Nobuo**
**Itabashi-ku**
**Tokyo 174-8580 (JP)**

• **Yamada, Mitsuharu**
**Itabashi-ku**
**Tokyo 174-8580 (JP)**
• **Watanabe, Hiroto**
**Itabashi-ku**
**Tokyo 174-8580 (JP)**
• **Moriyama, Takuya**
**Itabashi-ku**
**Tokyo 174-8580 (JP)**

(74) Representative: **HOFFMANN EITLE**
**Patent- und Rechtsanwälte**
**Arabellastrasse 4**
**81925 München (DE)**

(54) **Three-dimensional measurement system with projection device**

(57) The object of the invention is to improve the efficiency of and promote the automation of non-contact three-dimensional measurement over a wide area utilizing a projection device for projecting a target pattern. A projection device for three-dimensional measurement 80 according to the invention includes: a projection section 12 for projecting onto the shape of a measuring object a measurement pattern P indicating measurement points Q; a pattern projection control section 493 for controlling the projection section 12 to project the measurement pattern P; a pattern detection section 491 for detecting the measurement points Q from a photographed image of the measurement pattern P projected by the projection section 12; and a pattern forming section 492 for forming, based on displacement of the measurement points Q in a first measurement pattern detected by the pattern detection section 491, a second measurement pattern where the measurement points are increased, deleted or changed.

*FIG.1*

EP 1 770 356 A2

## Description

Technical Field

This invention relates to a projection device for three-dimensional measurement, and to a three-dimensional measurement system. More specifically, this invention relates to a three-dimensional measurement system that can automatically measure a wide area using a projection device for projecting a target pattern for three-dimensional measurement and a photographed image including the projected pattern.

Background Art

In conventional non-contact three-dimensional measurement, a relatively large-sized apparatus called "non-contact three-dimensional measurement machine" incorporating a light pattern projector and a CCD camera is used to measure small areas, targets affixed to each small area are measured by a photogrammetric technique, and the small areas are integrated based on the coordinate points of the targets into a wide area.
In case where only images from a digital camera or the like are used for three-dimensional measurement, a stereo pair is set, orientation of two or more images is determined, and a measurement position is set manually or semi-automatically.

Disclosure of Invention

[Problem to be Solved by the Invention]

To measure a wide area, a large-sized non-contact three-dimensional measurement machine is used to measure a large number of small areas, and a photogrammetric technique is used to photograph targets for connecting images affixed to each small area with a camera, to measure the target points three-dimensionally with high accuracy, and to integrate the camera coordinate system and the three-dimensional coordinate systems (such as global coordinate systems) of the targets in each area measured by the three-dimensional measurement machine to measure an entire wide area.
However, this technique is complicated since separate measurement devices are required to measure the small areas and the wide area, and cannot be automated through the entire three-dimensional measurement. In particular, in case of integrating a large number of small areas over an extended area with high accuracy, the reduced measurement range of each area results in a huge number of measurement areas, which in turn results in complicated and inefficient work. For example, a mere measurement of a side surface of a car requires 100 or more small areas or cuts. Thus, even if each operation is simple, the entire operation is ineffective, spending time and efforts.
The object of this invention is to improve the efficiency of and promote the automation of non-contact three-dimensional measurement over a wide area utilizing a projection device for projecting a target pattern.

[Means for Solving the Problem]

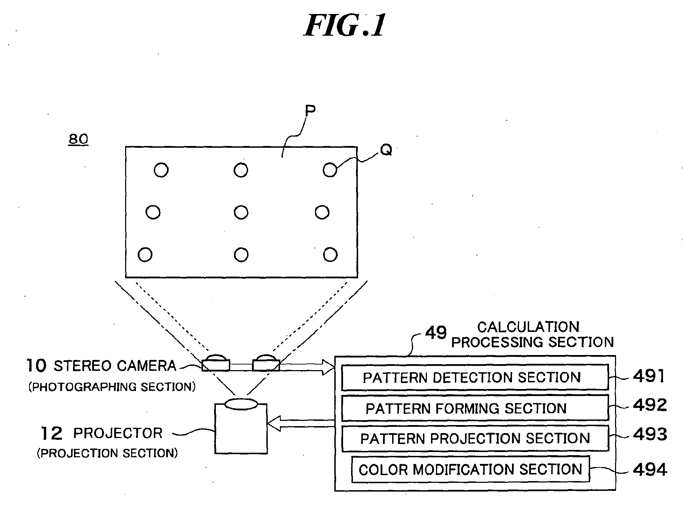

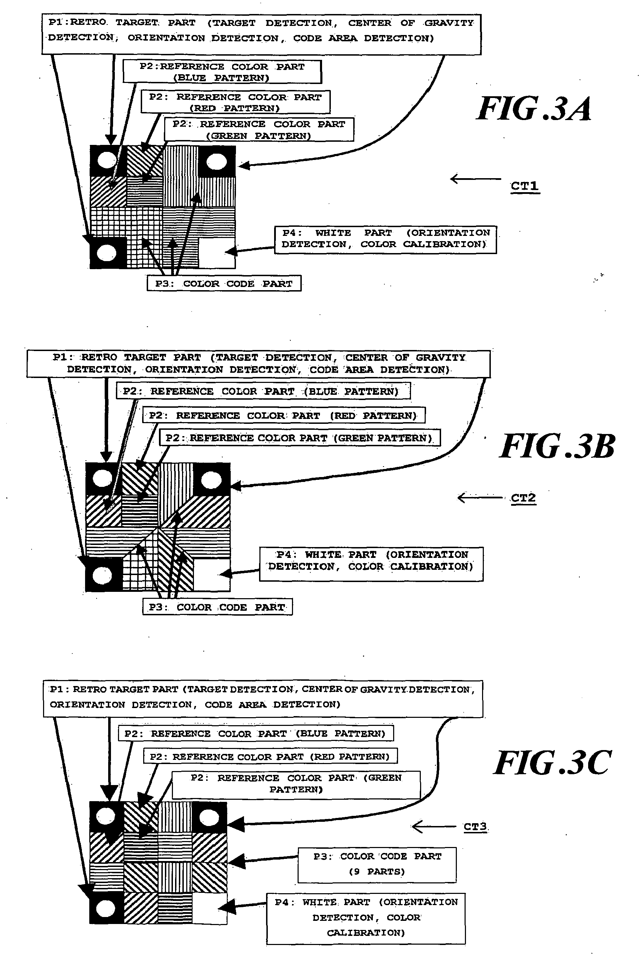

In order to achieve the above object, a projection device for three-dimensional measurement 80 according to the invention comprises, as shown in FIGs. 1 and 3 for example, a projection section 12 for projecting onto a measuring object a measurement pattern P indicating measurement points Q; a pattern projection control section 493 for controlling the projection section 12 to project the measurement pattern P; a pattern detection section 491 for detecting the measurement points Q from a photographed image of the measurement pattern P projected by the projection section 12; and a pattern forming section 492 for forming, based on displacement of the measurement points Q in a first measurement pattern detected by the pattern detection section 491, a second measurement pattern where the measurement points Q are increased, deleted or changed.
Here, the measurement points include orientation points, and the measurement patterns include orientation patterns. Three-dimensional measurement may be performed based on either absolute coordinates or relative coordinates. The term "displacement" means displacement from measurement points which would be obtained when a surface of a measuring object is projected onto a plane perpendicular to the projection light. The phrase "the measurement points are changed" means changing the type (such as grid intersection, small circle, retro target and color-coded target), the position, the color, the dimension, etc. of the measurement points. The phrase "based on the displacement, the measurement points are increased, deleted or changed" typically means increasing the measurement points where displacement of the measurement points is large. However, the phrase can also mean various operations, such as increasing the measurement points where a characteristic point such as a corner, a peak or a saddle point of a concave-convex, etc. is found, moving a measurement point near a characteristic point to the characteristic point, and deleting an inaccurate point found as a result of orientation or stereo matching. The first measurement pattern may be formed into the second measurement pattern more than once, and however many times as necessary. Accordingly, the measurement pattern may be projected and detected however many times as necessary. The pattern projection control section, the pattern detection section and the pattern forming section are typically implemented in a computer, and may be constituted integrally with or separately from the projection section.

With this constitution, the measurement pattern can be optimized according to the shape, etc. of the measuring object, thereby improving the efficiency of orientation and three-dimensional measurement using the optimized measurement pattern. Also, the processes from projection of a measurement pattern to detection of it can be automated, thereby promoting the automation of orientation and three-dimensional measurement.

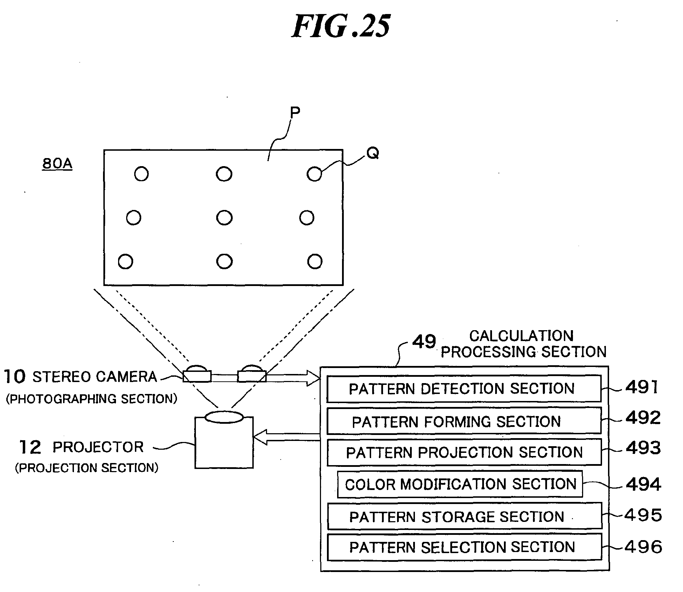

A projection device for three-dimensional measurement according to the invention comprises, as shown in FIG. 25 for example, a projection section 12 for projecting onto a measuring object a measurement pattern P indicating measurement points Q; a pattern storage section 495 for storing a plurality of the measurement patterns P; a pattern selection section 496 for selecting a measurement pattern P to be projected, out of the plurality of the measurement patterns P stored in the pattern storage section 495; a pattern projection control section 493 for controlling the projection section 12 to project the measurement pattern P selected by the pattern selection section 496; and a pattern detection section 491 for detecting the measurement points Q from a photographed image of the measurement pattern P projected by the projection section 12, wherein the pattern selection section 496 selects, based on displacement of the measurement points Q in a first measurement pattern detected by the pattern detection section 491, a third measurement pattern where the measurement points Q are increased, deleted or changed, out of the plurality of the measurement patterns P stored in the pattern storage section 495.

Here, the first measurement pattern may be changed into the third measurement pattern more than once, and however many times as necessary. Accordingly, the measurement pattern may be projected and detected however many times as necessary. The pattern selection section are typically implemented in a personal computer, and the pattern storage section may be implemented in a storage device disposed internally or externally to the personal computer. The pattern selection section and the pattern storage section may be constituted integrally with or separately from the projection section.

With this constitution, the measurement pattern can be optimized according to the shape, etc. of the measuring object, thereby improving the efficiency of orientation and three-dimensional measurement using the optimized measurement pattern. Also, the processes from projection of a measurement pattern to detection of it can be automated, thereby promoting the automation of orientation and three-dimensional measurement.

The projection device for three-dimensional measurement as recited above according to the invention may further comprise, as shown in FIG. 1 for example, a photographing section 10 for photographing the measurement pattern P projected by the projection section 12, wherein the pattern detection section 41 may detect the measurement points Q from an image of the measurement pattern P photographed by the photographing section 10. Here, the photographing section may be constituted integrally with or separately from the projection section, the pattern projection control section, etc.

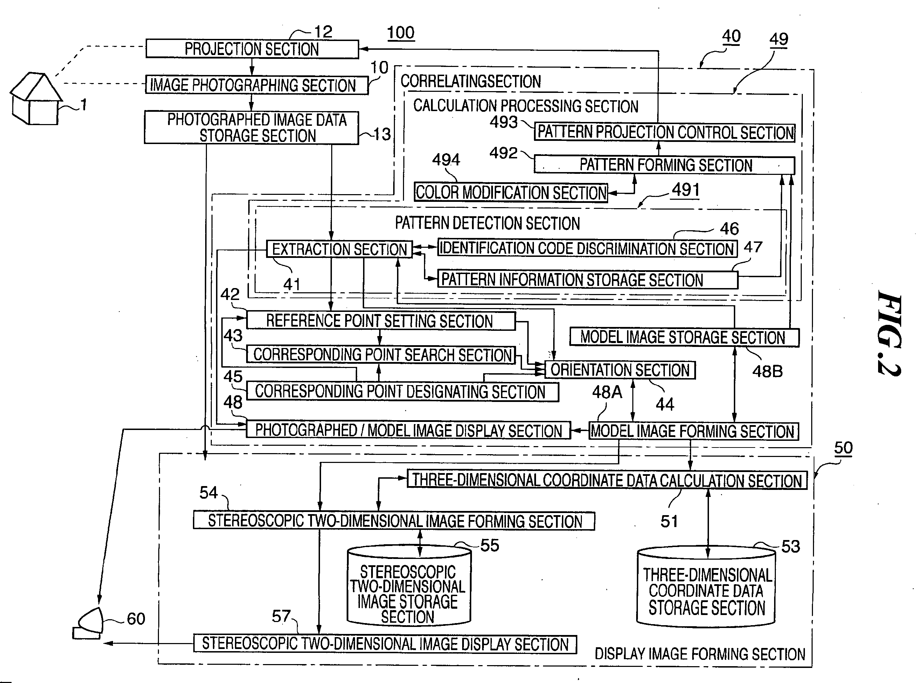

A three-dimensional measurement system 100 according to the invention may comprise, as shown in FIG. 2 for example, the projection device for three-dimensional measurement as recited above wherein the photographed image is a stereo image pair; and an orientation section 44 for determining orientation of the stereo image pair, wherein the orientation section 44 determines the orientation using the second measurement pattern or the third measurement pattern. With this constitution, orientation can be determined accurately and efficiently using an optimum measurement pattern.

A three-dimensional measurement system according to the invention may comprise, as shown in FIG. 2 for example, the projection device for three-dimensional measurement as recited above; and a three-dimensional coordinate data calculation section 51 for calculating three-dimensional coordinate s of the measuring object, wherein the three-dimensional coordinate data calculation section 51 may calculate the three-dimensional coordinates using the second measurement pattern or the third measurement pattern. With this constitution, three-dimensional measurement can be made accurately and efficiently using an optimum measurement pattern.

A calculation processing section 49, according to the invention, of a projection device for three-dimensional measurement having a projection section for projecting a measurement pattern onto a measuring object and detecting a predetermined data from a photographed image of the measurement pattern projected onto the measuring object, may comprise, as shown in FIG. 1 for example, a pattern projection control section 493 for controlling the projection section 12 to project onto the measuring object a measurement pattern P indicating measurement points Q; a pattern detection section 491 for detecting the measurement points Q from a photographed image of the measurement pattern projected by the projection section; and a pattern forming section 492 for forming, based on displacement of the measurement points in a first measurement pattern detected by the pattern detection section 491, a second measurement pattern where the measurement points are increased, deleted or changed.

With this constitution, the measurement pattern can be optimized according to the shape, etc. of the measuring object, thereby improving the efficiency of orientation and three-dimensional measurement using the optimized measurement pattern. Also, the processes from projection of a measurement pattern to detection of it can be automated, thereby promoting the automation of orientation and three-dimensional measurement.

In order to achieve the above object, a projection device for three-dimensional measurement 80 according to the invention comprises, as shown in FIG. 1 for example, a pattern forming section 492 for forming a measurement pattern P including a color-coded mark CT having a position detection pattern P1 for indicating a measurement position, and a color code pattern P3 colored with plural colors to allow identification of the mark and located in a predetermined position relative to the position detection pattern P1; a projection section 12 for projecting onto a measuring object the measurement pattern P formed by the pattern forming section 492; and a pattern detection section 491 for detecting the position detection pattern P1 and the color code pattern P3 from a photographed image of the measurement pattern projected by the projection section 12 to identify a color code.

Here, the measurement patterns include orientation patterns. Three-dimensional measurement may be performed based on either absolute coordinates or relative coordinates. The position detection pattern typically includes a retro target or a template pattern. However, the position detection pattern is not limited thereto, but may be a grid pattern or a dot pattern that allows identification of the position. The color code pattern typically includes a pattern having plural rectangular unit areas arranged adjacently. However, the color code pattern is not limited thereto, but may be a pattern having plural colored retro targets. The pattern may include a single unit area with different colors. The pattern projection control section, the pattern detection section and the pattern forming section are typically implemented in a personal computer, and may be constructed separately from the projection section.

With this constitution, identification of respective color-coded marks can facilitate, and also automate, searching a stereo image for corresponding points, connecting adjacent images, and setting a stereo matching area. This also can improve the efficiency of and promotes the automation of orientation and three-dimensional measurement.

A projection device for three-dimensional measurement according to the invention comprises, as shown in FIG. 25 for example, a pattern storage section 495 for storing a plurality of measurement patterns P including a color-coded mark CT having a position detection pattern P1 for indicating a measurement position and a color code pattern P3 colored with plural colors to allow identification of the mark and located in a predetermined position relative to the position detection pattern P1; a pattern selection section 496 for selecting a measurement pattern to be projected, from the plurality of measurement patterns stored in the pattern storage section 495; a projection section 12 for projecting onto a measuring object the measurement pattern selected by the pattern selection section 496; and a pattern detection section 491 for detecting the position detection pattern P1 and the color code pattern P3 from a photographed image of the measurement pattern projected by the projection section 12 to identify a color code.

Here, the pattern selection section may typically be implemented in a personal computer, and the pattern storage section may be implemented in a storage device disposed internally or externally to the personal computer. The pattern selection section and the pattern storage section may be constructed separately from the projection section.

With this constitution, identification of respective color-coded marks can facilitate, and also automate, searching a stereo image for corresponding points, connecting adjacent images, and setting a stereo matching area. This also can improve the efficiency of and promotes the automation of orientation and three-dimensional measurement.

The projection device for three-dimensional measurement as recited above according to the invention may further comprise, as shown in FIG. 1 for example, a photographing section 10 for photographing the measurement pattern projected by the projection section 12, wherein the pattern detection section 491 may detect the position detection pattern P1 and the color code pattern P3 from an image of the measurement pattern photographed by the photographing section 10 to identify a color code.

A calculation processing section 49, according to the invention, of a projection device for three-dimensional measurement having a projection section for projecting a measurement pattern onto a measuring object and detecting a predetermined data from a photographed image of the measurement pattern projected onto the measuring object comprises as shown in FIGs. 1 and 3 for example, a pattern forming section 492 for forming a measurement pattern P including a color-coded mark CT having a position detection pattern P1 for indicating a measurement position and a color code pattern P3 colored with plural colors to allow identification of the mark and located in a predetermined position relative to the position detection pattern P1; a pattern projection control section 493 for controlling the projection section 12 to project the measurement pattern; and a pattern detection section 491 for detecting the position detection pattern P1 and the color code pattern P3 from a photographed image of the measurement pattern projected by the projection section 12 to identify a color code.

With this constitution, identification of respective color-coded marks can facilitate, and also automate, searching a stereo image for corresponding points, connecting adjacent images, and setting a stereo matching area. This also can improve the efficiency of and promotes the automation of orientation and three-dimensional measurement.

[Effect of the Invention]

The invention can improve the efficiency of and promote the automation of non-contact three-dimensional measurement over a wide area utilizing a projection device for projecting a target pattern.

Brief Description of Drawings

FIG. 1 is a block diagram showing an example of the basic structure of a projection device according to a first embodiment.
FIG. 2 is a block diagram showing an example of the general structure of a three-dimensional measurement system according to the first embodiment.
FIGs. 3A, 3B and 3C (FIG. 3) show examples of color-coded target.
FIG. 4 shows an example of the structure of an extraction section and an identification code discrimination section.
FIG. 5 is an exemplary process flowchart of a three-dimensional measurement system according to the first embodiment.
FIGs. 6A and 6B (FIG. 6) show an example of overlap photographing.
FIGs. 7A and 7B (FIG. 7) show an example of images photographed by stereo cameras.
FIG. 8 is an exemplary flowchart of selection of a stereo pair.
FIG. 9 is a diagram for explaining a model image coordinate system XYZ and camera coordinate systems xyz in a stereo image.
FIGs. 10A and 10B (FIG. 10) show an example of target having reference points.
FIG. 11 is an exemplary flowchart of automatic correlation using reference points.
FIG. 12 is an exemplary flowchart of the process of automatic determination of a stereo matching area.
FIG. 13 is a diagram for explaining automatic determination of a stereo matching area.
FIG. 14 is an exemplary flowchart of measurement utilizing the projection device.
FIG. 15 is an exemplary flowchart of the process of preparation before measurement.
FIGs. 16A and 16B (FIG. 16) show examples of measurement preparation pattern.
FIG. 17 is an exemplary flowchart of detection of color-coded targets.
FIGs. 18A1, 18A2, 18B1 and 18B2 (FIG. 18) are diagrams for explaining detection of the center of gravity using a retro target.
FIG. 19 is an exemplary flowchart of the process by a color-coded target area / direction detection processing section.
FIG. 20 is an exemplary flowchart (continuation) of the process by a color-coded target area / direction detection processing section.
FIGs. 21A and 21B (FIG. 21) are drawings (part 1) for explaining how codes are read using retro targets.
FIGs. 22A and 22B (FIG. 22) are drawings (part 2) for explaining how codes are read using retro targets.
FIG. 23 is an exemplary process flowchart of a method for projecting a three-dimensional measurement pattern (with the execution of the preparation before measurement) according to the first embodiment.
FIG. 24 is an exemplary process flowchart of another method for projecting a three-dimensional measurement pattern (projecting color-coded targets) according to the first embodiment.
FIG. 25 shows an example of the structure of a projection device for three-dimensional measurement according to a second embodiment.
FIG. 26 is a block diagram showing an example of the general structure of a three-dimensional measurement system according to the second embodiment.
FIG. 27 is an exemplary process flowchart of a method for projecting a three-dimensional measurement pattern (with the execution of the preparation before measurement) according to the second embodiment.
FIG. 28 is an exemplary process flowchart of another method for projecting a three-dimensional measurement pattern (projecting color-coded targets) according to the second embodiment.
FIG. 29 is an exemplary flowchart of the process of approximate measurement according to a fourth embodiment.
FIG. 30 is an exemplary flowchart of the process of approximate surface measurement according to the fourth embodiment.

Best Mode for Carrying Out the Invention -

The basic Japanese Patent Applications No. 2005-289332 filed on September 30, 2005 and No. 2005-289333 filed on September 30, 2005 are hereby incorporated in their entirety by reference into the present application.
This invention will become more fully understood from the detailed description given hereinbelow. The other applicable fields will become apparent with reference to the detailed description given hereinbelow. However, the detailed description and the specific embodiment are illustrated of desired embodiments of this invention and are described only for the purpose of explanation. Various changes and modifications will be apparent to those ordinary skilled in the art on the basis of the detailed description.

The applicant has no intention to give to public any disclosed embodiments. Among the disclosed changes and modifications, those which may not literally fall within the scope of the present claims constitute, therefore, a part of this invention in the sense of doctrine of equivalents.

While the invention will be described in connection with certain preferred embodiments, there is no intent to limit it to those embodiments. On the contrary, the intent is to cover all alternatives, modifications and equivalents as included within the spirit and scope of the invention as defined by the appended claims.

[First Embodiment]

A first embodiment of this invention is described hereinafter with reference to the drawings. This embodiment represents an example in which projection of a measurement pattern (including an orientation pattern) in preparation for measurement is utilized for reconstructing a measurement pattern for use in orientation or three-dimensional measurement, and also represents an example in which a color-coded target is used as a target (mark) to construct a measurement pattern.

[Structure of projection device]

FIG. 1 is a block diagram showing an example of the basic structure of a projection device 80 according to this embodiment. In FIG. 1, reference numeral 12 denotes a projector as a projection section for projecting various projection patterns such as a measurement pattern, 10 a stereo camera as a photographing section for photographing the projected patterns, and 49 a calculation processing section. The calculation processing section 49 includes a pattern detection section 491 for detecting a characteristic point, a measurement point, a mark (target), etc. from the image photographed by the photographing section 10, a pattern forming section 492 for forming the various projection patterns and pattern elements such as a color-coded target CT and a reference point RF for use in those projection patterns, and a pattern projection control section 493 for controlling the projection section 12 to project the projection patterns formed by the pattern forming section 492. The calculation processing section 49 also includes a color modification section 494 for modifying the color in the projection patterns. For example, the color modification section 494 modifies the color of color-coded targets CT in the projection patterns based on the color of a photographed image obtained in a texture lighting mode.

The projection patterns include various patterns, such as a measurement pattern, an orientation pattern, a random pattern, a measurement preparation pattern, an overlap photographing range indication pattern and a texture light pattern. The measurement pattern P indicates measurement points Q (such as a position detection pattern) for use in three-dimensional measurement. The measurement points Q projected on a measuring object are used as measurement points of a three-dimensional shape. The orientation pattern indicates orientation points for use in orientation. The orientation points projected on the measuring object are photographed in stereo and used in orientation. There is no clear distinction between the measurement pattern and the orientation pattern, except that the former generally has more measurement points than orientation points of the latter. Generally, a pattern for use in three-dimensional measurement is called as a measurement pattern, while a pattern for use in orientation is called as an orientation pattern.

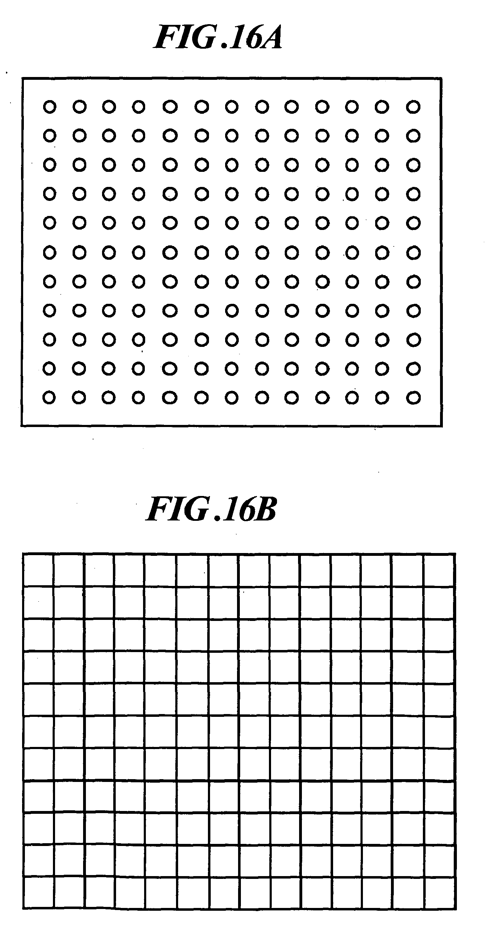

The random pattern is a type of measurement pattern with measurement points arranged at random. The measurement preparation pattern is used in a preparatory measurement to orientation or three-dimensional measurement. A grid pattern or a pattern with many small circles arranged in an array such as shown in FIG. 16 is used as the measurement preparation pattern. The intersections of the grid pattern or the centers of gravity of the small circles are used as measurement points or orientation points. The measurement preparation pattern is not limited to these patterns, but may also be an ordinary orientation pattern or measurement pattern. In this embodiment, the measurement pattern, the orientation pattern, the random pattern and the measurement preparation pattern are collectively referred to as the measurement pattern, and the orientation points are also referred to as the measurement points.

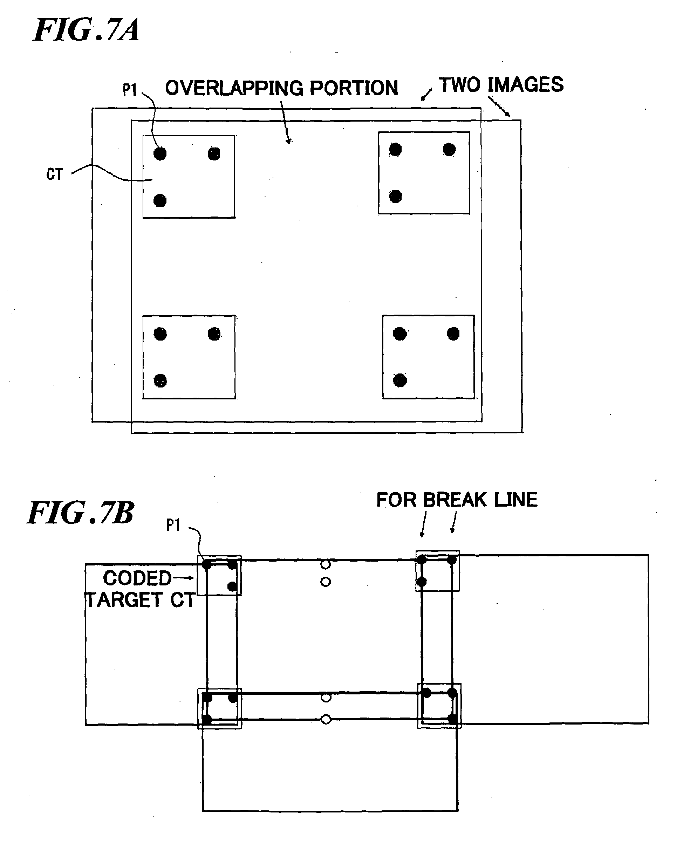

The overlap photographing range indication pattern indicates the overlapping range of a stereo image. Assuming left and right images of a stereo image with color-coded targets CT at the four corners such as shown in FIG. 7A, the overlap photographing range indication pattern indicates the overlapping part including the four color-coded targets. The texture light pattern is not a pattern of shapes, but is a pattern of uniform light for obtaining texture cast onto an object.

[System structure]

FIG. 2 is a block diagram showing an example of the general structure of a three-dimensional measurement system 100 in this embodiment. The three-dimensional measurement system 100 includes the photographing section

**EP 1 770 356 A2**

10, the projection section 12, a photographed image data storage section 13, a correlating section 40, the calculation processing section 49, a display image forming section 50, and a display device 60. Among the components described above, the photographed image data storage section 13, the correlating section 40, the calculation processing section 49, and the display image forming section 50 may be implemented by, for example, a computer. A measuring object 1 is a tangible substance such as a work object or a manufacturing object, and may be, for example, architecture, various work products from factories or the like, a human figure, a landscape, etc.

The projection section 12 projects various patterns onto the measuring object 1. The photographing section 10 obtains a photographed image (which is typically a stereo image, but may also be a pair of single photographic images) of the measuring object 1. The photographing section 10 may, for example, include equipment of a measurement-purpose stereo camera or a general-purpose digital camera and a device for compensating for lens aberrations in an image of the measuring object 1 photographed by such cameras. The photographed image data storage section 13 stores a photographed image of the measuring object 1. The photographed image data storage section 13 stores, for example, a stereo image of the measuring object 1 photographed by the photographing section 10.

The correlating section 40 correlates a pair of photographed images or model images of the measuring object 1 to determine orientation or perform stereo matching. In case of using a stereo image of the measuring object 1, an orientation process is performed after a color-coded mark is extracted, a reference point is set, and a corresponding point is searched for. The correlating section 40 also performs stereo matching for three-dimensional measurement. The correlating section 40 includes an extraction section 41, a reference point setting section 42, a corresponding point search section 43, an orientation section 44, a corresponding point designating section 45, an identification code discrimination section 46, a pattern information storage section 47, a photographed / model image display section 48, a model image forming section 48A, a model image storage section 48B, and the calculation processing section 49. The extraction section 41, the identification code discrimination section 46, and the pattern information storage section 47 function also as the pattern detection section 491 of the calculation processing section 49. A matching processing section 70 plays an important role in stereo matching. The matching processing section 70 includes the reference point setting section 42, the corresponding point search section 43, and the corresponding point designating section 45.

The reference point setting section 42 searches the vicinity of a designated point on one image (reference image) of a stereo image for a point corresponding to a characteristic point, and sets the point corresponding to the characteristic point as a reference point. The characteristic point may be, for example, the center, the center of gravity, and the corners of the measuring object 1, a mark (target) affixed to or projected on the measuring object 1, etc. The corresponding point search section 43 determines a corresponding point that corresponds to the reference point set by the reference point setting section 42 and that is on the other image (search image) of the stereo image. When an operator designates a point in the vicinity of a characteristic point with the corresponding point designating section 45, the characteristic point intended by the operator can be snapped at by means of the reference point setting section 42 without the operator exactly designating the characteristic point, and a corresponding point in the search image can be determined by the corresponding point search section 43.

The orientation section 44 finds relationship as to corresponding points in a pair of images, such as a stereo image, using the reference point set by the reference point setting section 42 and the corresponding point determined by the corresponding point search section 43, and performs an orientation calculation process. The corresponding point designating section 45 determines a corresponding point on the search image in case where the operator designates a point outside the vicinity of a characteristic point on the reference image. The operator can easily recognize the correlation between characteristic points of the measuring object 1 by contrasting the positions on the display device 60 of the designated point on the reference image and of the corresponding point on the search image determined by the corresponding point designating section 45. The orientation section 44 also determines relative orientation using positional correspondence determined by the corresponding point designating section 45.

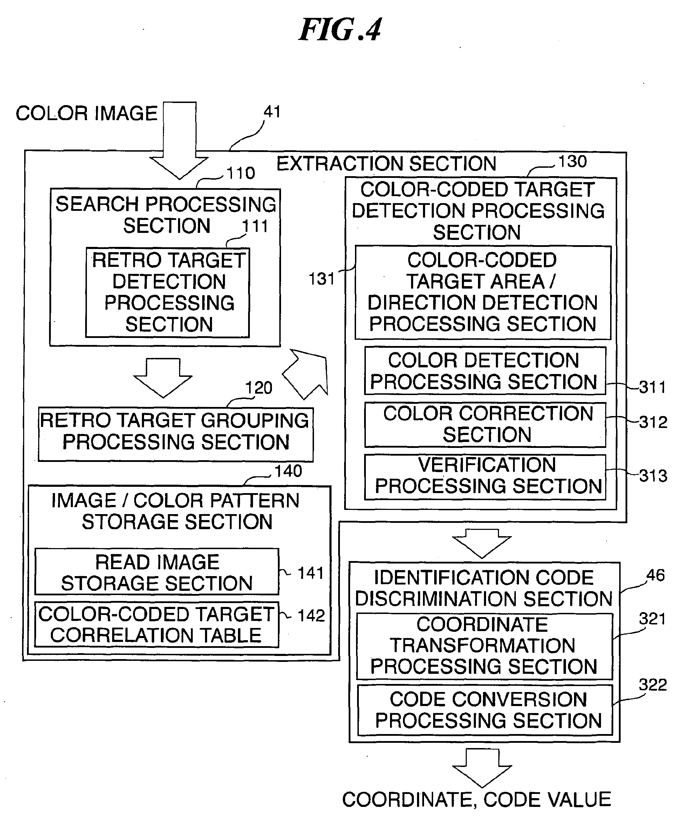

The calculation processing section 4 9 receives image data from the photographing section 10 and detects various patterns therefrom, and also generates various patterns to be projected from the projection section 12. The pattern detection section 491 detects the various patterns. The functions of the extraction section 41 and the identification code discrimination section 46 of the pattern detection section 491 will be described later with reference to FIG. 4. The pattern information storage section 47 stores pattern information such as position coordinates and color codes of color-coded targets and position coordinates of reference points, detected by the extraction section 41 and discriminated by the identification code discrimination section 46. A color correction section 312 in the extraction section 41 corrects the color in the extracted photographed image, while the color modification section 494 in the calculation processing section 49 modifies the color in the formed or selected projection pattern.

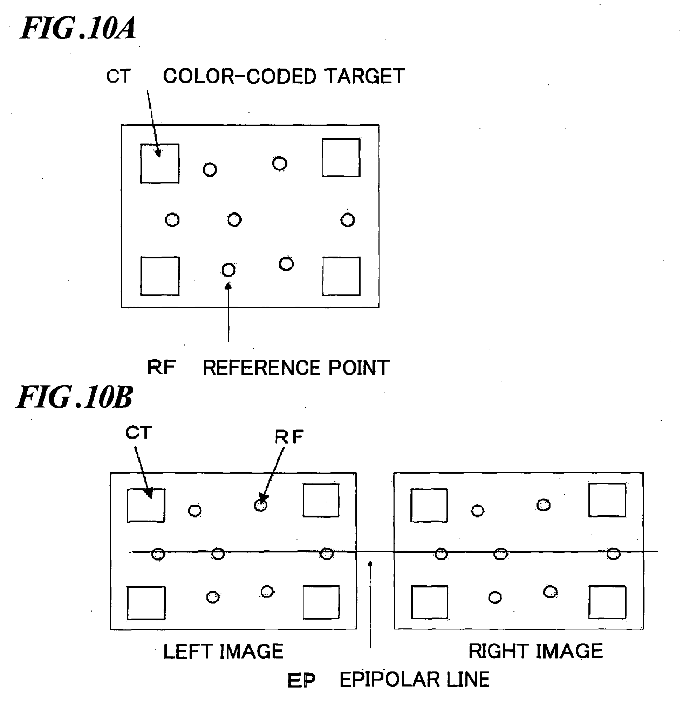

The model image forming section 48A forms a model image based on the parameters (the position and the tilt of the camera used in the photographing) obtained through the orientation calculation process by the orientation section 44. The model image, also called as rectified image, refers to a pair of left and right photographed images (stereo image) with their corresponding points rearranged on an identical epipolar line EP (see FIG. 10B) so as to be viewed stereoscopically. The model image storage section 48B stores the model image of the measuring object 1 formed by the model

7

image forming section 48A. The photographed / model image display section 48 displays on the display device 60 the photographed image, or the model image formed by the model image forming section 48A, as a pair of images during the extraction, reference point setting, corresponding point search, stereo matching processes, etc., performed by the correlating section 40.

The display image forming section 50 creates and displays a stereoscopic two-dimensional image of the measuring object 1 viewed from an arbitrary direction based on the three-dimensional coordinate data on the measuring object 1 and the photographed image or the model image of the measuring object 1. A three-dimensional coordinate data calculation section 51 calculates coordinates of three-dimensional positions of the measuring object 1, and a three-dimensional coordinate data storage section 53 stores the calculation results. A stereoscopic two-dimensional image forming section 54 forms a stereoscopic two-dimensional image based on the obtained three-dimensional coordinate data, and a stereoscopic two-dimensional image storage section 55 stores the resulting image. A stereoscopic two-dimensional image display section 57 displays on the display device 60 a stereoscopic two-dimensional image viewed from an arbitrary direction based on the information stored in the stereoscopic two-dimensional image storage section 55.

[Color-coded target]

FIG. 3 shows examples of color-coded target. FIG. 3A shows a color-coded target with three color code unit areas, FIG. 3B with six color code unit areas, and FIG. 3C with nine color code unit areas. The color-coded targets CT (CT1 to CT3) of FIGs. 3A to 3C include a position detection pattern (retro target part) P1, a reference color pattern (reference color part) P2, a color code pattern (color code part) P3, and an empty pattern (white part) P4. The position detection pattern P1, the reference color pattern P2, the color code pattern P3 and the empty pattern P4 are arranged in predetermined positions within the color-coded target CT1. That is, the reference color pattern P2, the color code pattern P3 and the empty pattern P4 are arranged in predetermined positional relationship with respect to the position detection pattern P1.

The retro target part P1 is used for detecting the target itself, the center of gravity thereof, the orientation (tilt) of the target, and the target area.

The reference color part P2 is used as a reference for relative comparison to deal with color deviation due to photographing conditions such as of lighting and camera, or used for color calibration to compensate for color deviation. In addition, the reference color part P2 can also be used for color correction of a color-coded target CT created in a simple way. For example, in case of using a color-coded target CT printed by a color printer (inkjet, laser or dye-sublimation printer, etc.) that is not color managed, individual variations in color occur depending on the printer that is used. However, the influence of such individual variations can be suppressed by relatively comparing the reference color part P2 and the color code part P3 and correcting their colors.

The color code part P3 expresses a code using a combination of colors distributed to respective unit areas. The number of codes that can be expressed changes with the number of code colors that can be used for codes. For example, in case where the number of code colors is "n", the color-coded target CT1 of FIG. 3A can express $n \times n \times n$ kinds of codes, because there are three unit areas of the color code part P3. Even under the condition that the unit areas do not use duplicate colors to increase reliability, $n \times (n-1) \times (n-2)$ kinds of codes can be expressed. When the number of code colors is increased, the number of codes can be accordingly increased. In addition, given the condition that the number of unit areas of the color code part P3 is equal to the number of code colors, all the code colors are used for the color code part P3. Therefore, an identification code can be determined while checking the color for each unit area not only by comparison with the reference color part P2 but also by relative comparison between the respective unit areas of the color code part P3, to thereby increase reliability. Further, with an additional condition that each unit area has the same size, the unit areas can also be used to detect the color-coded target CT from an image. This is made possible by the fact that even color-coded targets CT with different identification codes have areas of respective colors of the same size and hence generally similar dispersion values can be obtained from light detected from the entire color code part. Also, since boundaries between the unit areas where a clear difference in color can be detected come at regular intervals, the color-coded target CT can be detected from an image also from such a repeated pattern of detected light.

The white part P4 is used for the detection of the direction of the color-coded target CT and calibration of color deviation. Of the four corners of the color-coded target CT, only one corner does not have a retro target, and that corner can be used for the detection of the direction of the color-coded target CT. That corner, or the white part P4, only needs to have a pattern different from the retro target. Thus, the white part may have printed therein a character string such as number for allowing visual confirmation of a code, or may be used as a code area for containing a barcode, etc. The white part may also be used as a template pattern for template matching to further increase detection accuracy.

FIG. 4 shows an example of the structure of the extraction section 41 for extracting a color-coded target and the identification code discrimination section 46 for discriminating a color code of the color-coded target. The extraction section 41 includes a search processing section 110, a retro target grouping processing section 120, a color-coded target detection processing section 130, and an image / color pattern storage section 140. The identification code discrimination section 46 discriminates a color code detected by the color-coded target detection processing section 130 to provide a code number to it.

The search processing section 110 detects a position detection pattern P1 such as retro target pattern from a color image (photographed image or model image) read from the photographed image data storage section 13 or the model image storage section 48B. In case where a template pattern instead of a retro target pattern is used as the position detection target, the template pattern is detected.

The retro target grouping processing section 120 groups those retro targets detected by the search processing section 110 and determined as belonging to the same color-coded target CT (for example, those with coordinates falling within the color-coded target CT) as candidates for retro targets belonging to the same group.

The color-coded target detection processing section 130 includes a color-coded target area / direction detection processing section 131 for detecting the area and the direction of a color-coded target CT based on a group of retro targets determined as belonging to the same color-coded target, a color detection processing section 311 for detecting the color arrangement in the reference color part P2 and the color code part P3 of a color-coded target CT and detecting the color of the measuring object 1 in an image, a color correction section 312 for correcting the color of the color code part P3 and the measuring object 1 in an image with reference to the reference color pattern P2, and a verification processing section 313 for verifying whether or not the grouping has been performed properly. The color correction section 312 corrects the color in the extracted photographed image, while the color modification section 494 modifies the color in the formed or selected projection pattern.

The image / color pattern storage section 140 includes a read image storage section 141 for storing an image (photographed image or model image) read by the extraction section 41, and a color-coded target correlation table 142 for storing a type-specific code number indicating the type of color-coded target CT for plural types of color-coded target CT expected to be used and for storing information on correlation between the pattern arrangement and the code number for each type of color-coded target CT.

The identification code discrimination section 46 discriminates an identification code based on the color arrangement in the color code part P3 for conversion into an identification code. The identification code discrimination section 46 includes a coordinate transformation processing section 321 for transforming the coordinate of a color-coded target CT based on the area and the direction of the color-coded target CT detected by the color-coded target detection processing section 130, and a code conversion processing section 322 for discriminating an identification code based on the color arrangement in the color code part P3 of the coordinate-transformed color-coded target CT for conversion into an identification code.

[System operation]

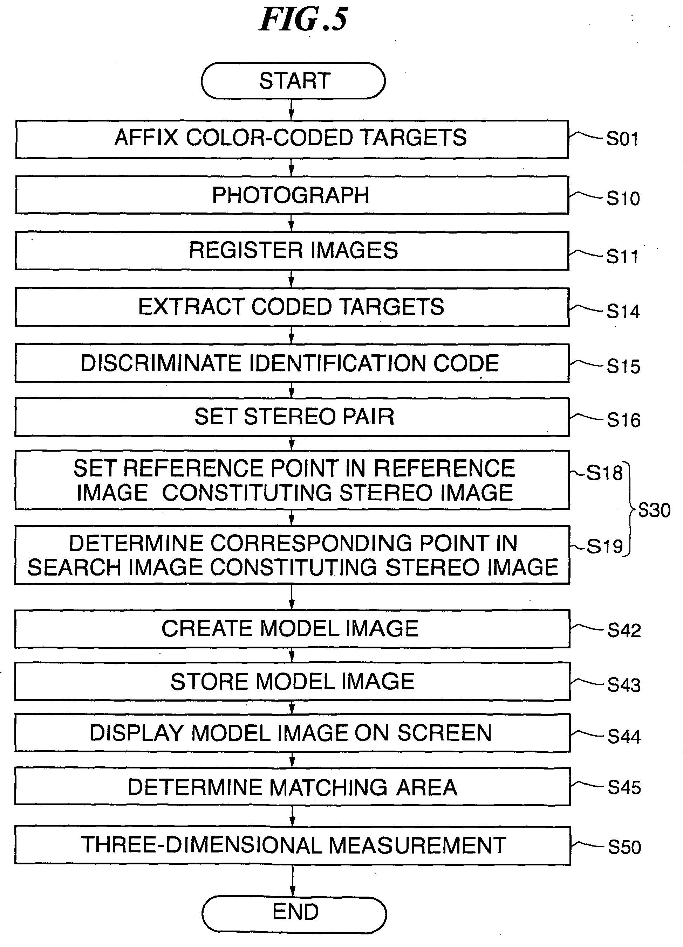

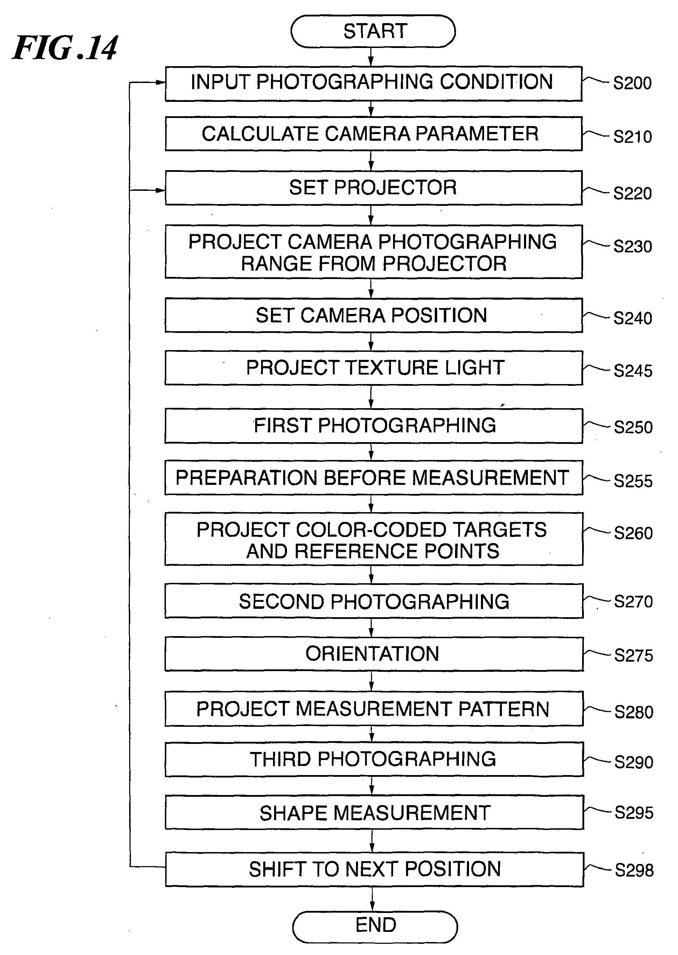

FIG. 5 is an exemplary flowchart for explaining the operation of the three-dimensional measurement system. FIG. 5 shows a basic flow that does not include a flow involving projection of various patterns. The flow involving projection of various patterns will be described later with reference to FIG. 14.

First, a color-coded target is affixed to a photographing object 1 (S01). The color-coded target may be provided by projection, in addition to or instead of affixation. The position where the color-coded target is affixed will be used as measurement points Q in orientation or three-dimensional measurement. Then, an image (typically, a stereo image) of the measuring object 1 is photographed using the photographing section 10 such as a digital camera (S10), and the photographed image is registered in the photographed image data storage section 13 (S11).

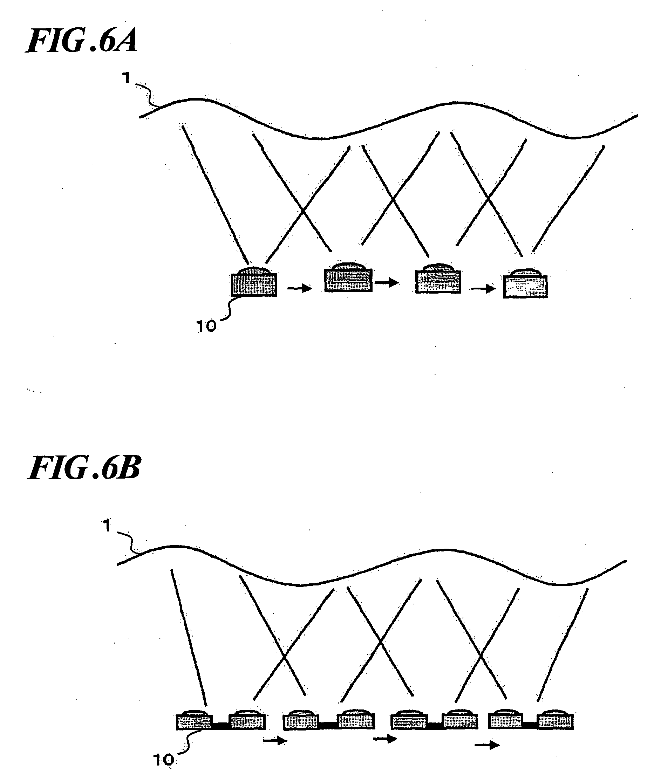

FIG. 6 shows an example of overlap photographing. One, two or more cameras 10 are used to photograph the measurement object 1 in an overlapping manner (S10). There is no particular restriction on the number of cameras 10. That is, one, plural, or any number of cameras 10 may be used. FIG. 6B shows a basic configuration in which a pair of cameras perform stereo photographing to obtain a series of stereo images partially overlapping with each other for use in orientation or three-dimensional measurement. Alternatively, a single camera may be used for overlap photographing from plural directions as shown in FIG. 6A, or more than two cameras may be used for overlap photographing. Two images overlapping with each other form a pair, in which case an image may form a pair with an image on its left and also form another pair with an image on its right, for example.

FIG. 7 shows an example of images photographed by left and right stereo cameras. FIG. 7A shows how images overlap with each other to form a stereo image. The basic range of measurement is the overlapping range of two (a pair of) images photographed in stereo. At this time, it is preferable that four color-coded targets CT are included in the overlapping range. In this way, three-dimensional measurement is possible using the stereo image. FIG. 7B shows an example of how adjacent stereo images overlap with each other. It is preferable to obtain a series of images overlapping with each other such that an image has two color-coded targets CT in common with another image on its upper, lower, left and right sides. In this way, automation of non-contact three-dimensional measurement over a wide range is made possible.

Then, returning to FIG. 5, the correlating section 40 reads the photographed image registered in the photographed image data storage section 13, or the model image stored in the model image storage section 48B, into the image / color pattern storage section 140 of the extraction section 41. Color-coded targets CT are extracted from the photographed image by the extraction section 41 (S14). The identification codes of the extracted color-coded targets CT are discriminated by the identification code discrimination section 46 (S15), and the position coordinates and the identification codes of the extracted color-coded targets CT are stored in the pattern information storage section 47.

[Setting stereo pair]

Next, the process proceeds to the setting of a stereo pair. Of the images registered in the stereo image data storage section 13, a pair of left and right images are set as a stereo pair (S16) by utilizing the identification codes.

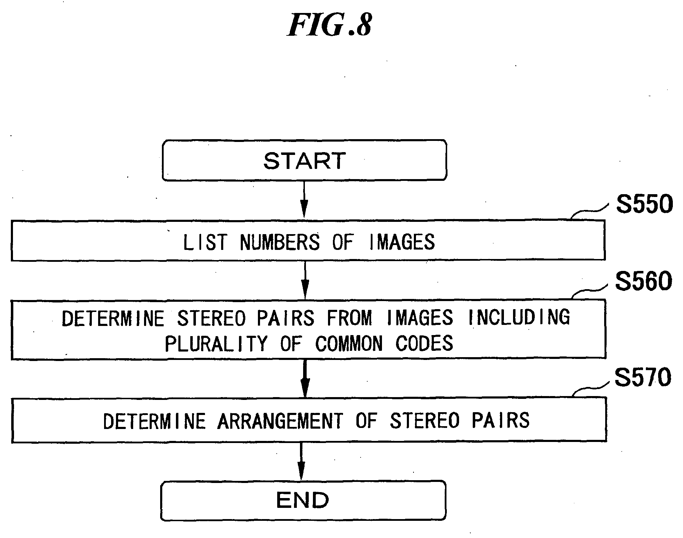

FIG. 8 is an exemplary flowchart of the selection of a stereo pair (S16). First, the numbers of the color-coded targets CT registered for each image are listed (S550). Based on these numbers, a stereo pair of images are selected out of those including plural targets CT with a common code number (S560). If the images are photographed in stereo so as to include four color-coded targets CT as shown in FIG. 7A, such pairs of images including four identical color-coded targets CT can be set as stereo pairs. In case where stereo pairs share two color-coded targets CT with a common code number as shown in FIG. 7B, the arrangement of the stereo pairs can be determined (S570) because the images are adjacent to each other vertically or horizontally. The flow of selecting a stereo pair can be performed automatically.
Next, the reference point setting section 42 searches for a point appropriate as a characteristic point in the vicinity of a point designated on one image (reference image) of a stereo image, and sets the point appropriate as the characteristic point as a reference point (S18). The corresponding point search section 43 determines a point corresponding to the reference point on the other image (search image) of the stereo image (S19).

[Orientation]

Next, the orientation section 44 determines orientation (step S30). The orientation section 44 determines relative orientation of the stereo image of the measuring object 1 stored in the photographed image data storage section 13 to find relationship as to corresponding points of the stereo image with respect to the model image.
Here, the operator designates a point on a reference image with a mouse cursor or the like, and the reference point setting section 42 and the corresponding point search section 43 read the coordinates of a reference point appropriate as a characteristic point and those of a point corresponding to the designated point, to obtain corresponding points (identical points) on two or more images. Six or more corresponding points are normally required for each image. If three-dimensional coordinate data on the measuring object 1 separately measured by a three-dimensional position measurement device (not shown) are stored beforehand in the three-dimensional coordinate data storage section 53, the reference point coordinates and the images are correlated to determine absolute orientation. If not stored, relative orientation is determined.
For example, if an overlapping stereo image includes four color-coded targets CT each including three position detection patterns (retro targets), an orientation process can be performed based on the coordinates of the centers of gravity of the total of twelve position detection patterns (retro targets). Since orientation can be determined with six points at least, each color-coded target may only include two position detection patterns at least. In that case, orientation is determined using eight points. The orientation process can be performed automatically, manually or semi-automatically. In the semi-automatic orientation process, clicking the vicinity of a position detection pattern P1 in a color-coded target CT with a mouse triggers automatic position detection.
Then, for each image selected as a stereo pair, the orientation section 44 performs an orientation calculation process using the coordinates of the corresponding points. The position and the tilt of the left and right cameras that photographed the images, the positions of the corresponding points, and the measurement accuracy can be obtained in the orientation calculation process. In the orientation calculation process, relative orientation is determined to correlate a pair of photographed images or a pair of model images, while bundle adjustment is performed to determine orientation between plural or all images.

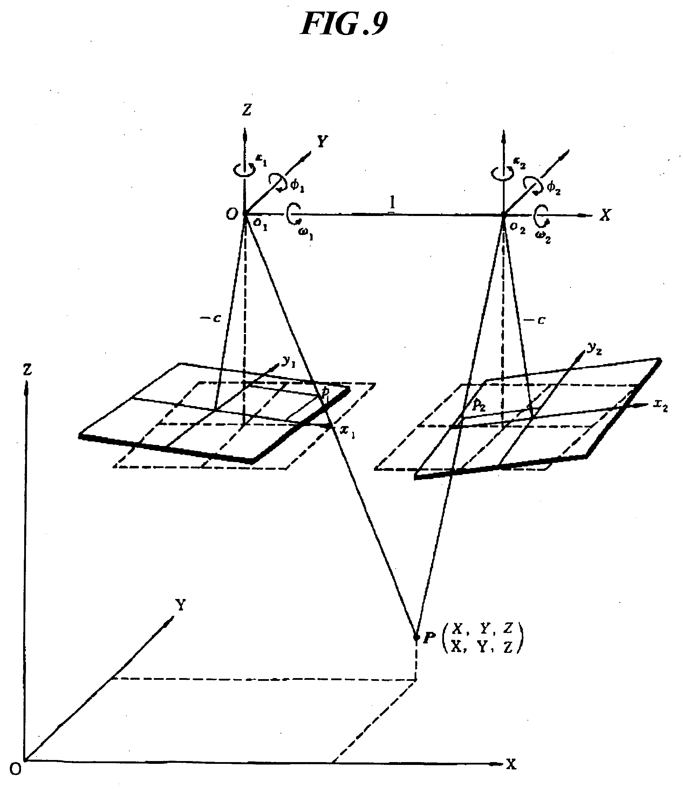

FIG. 9 is a diagram for explaining a model coordinate system XYZ and camera coordinate systems xyz in a stereo image. An origin of the model coordinate system is used as a left projection center, and a line connecting it and a right projection center is used as an X-axis. As for the reduction scale, the base length is used as the unit length. At this time, parameters to be obtained are five rotational angles, namely Z-axis rotational angle $\kappa 1$ and Y-axis rotational angle $\varphi 1$ of the left camera, and Z-axis rotational angle $\kappa 2$, Y-axis rotational angle $\varphi 2$ and X-axis rotational angle $\omega 2$ of the right camera. In this case, X-axis rotational angle $\omega 1$ of the left camera is 0 and thus need not be considered. The parameters required to decide the left and right camera positions are obtained from a coplanarity condition equation.
The model image forming section 48A forms a pair of model images based on the parameters determined by the orientation section 44 (S42), and the model image storage section 48B stores the model images formed by the model image forming section 48A (S43). The photographed / model image display section 48 displays these model images as a stereo image on the display device 60 (S44).

FIG. 10 shows an example of target having reference points RF. The orientation accuracy can be increased with the orientation using a measurement pattern having reference points RF and with a repeat of the orientation. Such orientation is normally determined based on a model image once subjected to an orientation process. The model images are read from the model image storage section 48B into the read image storage section 141 of the extraction section 41, and used for reorientation. In FIG. 10A, plural retro targets are arranged as reference points RF. In case of a flat measuring object 1, color-coded targets CT alone may be sufficient. However, in case where the measuring object 1 has a complicated surface or a surface with a large curvature, a large number of retro targets as reference points RF may be affixed in addition to the color-coded targets CT for increased orientation and measurement reliability.

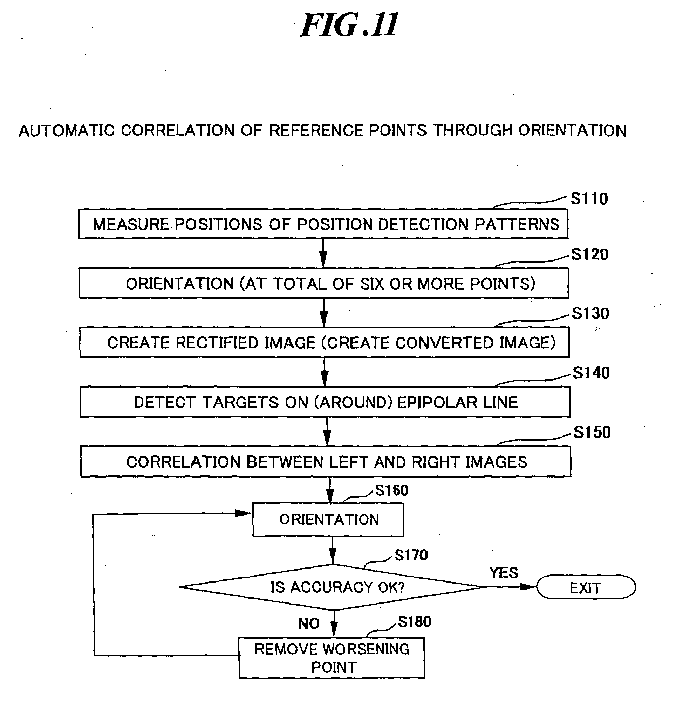

FIG. 11 is an exemplary flowchart of the automatic correlation using reference points. Here, a description is made of the automatic position detection and correlation using reference points RF. First, the positions of position detection patterns (retro targets) P1 in color-coded targets CT are detected (S110). In FIG. 10A, the four color-coded targets CT have a total of twelve position detection patterns P1, that is, six points or more, which allows an orientation process. Therefore, an orientation process is performed, and then a rectification process is performed. In general, the position and the tilt of the cameras used in the photographing are obtained through the orientation work (S120), and the orientation results are used to create a rectified image (S130). Here, the model image forming section 48A forms a rectified image using the orientation results by the orientation section 44.

The model image, also called as rectified image, refers to a pair of left and right photographed images with their corresponding points rearranged on an identical epipolar line EP) so as to be viewed stereoscopically. A rectified image (model image) is created by a rectification process. The rectified image means an image that the epipolar lines EP of the left and right images are horizontally aligned with each other. Thus, as shown in FIG. 10B, the reference points RF in the left and right images are rearranged on the same epipolar line EP. When the results of the orientation process are used to create a model image, such a rectified image can be obtained.

Then, a search is made for targets to be reference points RF on the same epipolar line EP (S140). In case of a rectified image, one-dimensional search on a single line is sufficient and hence the search is easy. In other cases, the search is made not only on the epipolar line but also on several lines around the epipolar line. If a reference point RF is found on an identical line as shown in FIG. 10B, it is correlated as a corresponding point and identified (numbered) (S150). In case where plural reference points RF are on an identical line, the reference points RF are identified according to their horizontal positions. Then, orientation is determined again with an additional, detected reference point RF (S160). The reliability of orientation can be increased by the repeated orientation. If the orientation results are accurate enough (S170) and have no problem, the process is terminated. If not accurate enough, an inaccurate point is removed (S180), and orientation is determined again (S160).

[Determination of matching area]

Next, turning to FIG. 5, the correlating section 40 determines a matching area (determines the range of three-dimensional measurement) (S45), the three-dimensional coordinate calculation section 51 performs three-dimensional measurement (stereo measurement) (S50), and the three-dimensional coordinates of corresponding points in a stereo image are registered in the three-dimensional coordinate data storage section 53. The determination of a matching area (S45) can be performed through manual measurement, semi-automatic measurement or automatic measurement. In the semi-automatic orientation process, clicking the vicinity of a position detection pattern P1 in a color-coded target CT with a mouse triggers automatic position detection.

Then, a description is made of the automatic determination of a stereo matching area. The corresponding point search section 43 automatically sets a matching range so as to include the color-coded targets CT located at the four corners of a stereo image as shown in FIG. 7A. Before the matching, a series of model images of the measuring object 1 may be arranged such that the identification codes of color-coded marks CT shared by adjacent model images coincide with each other.

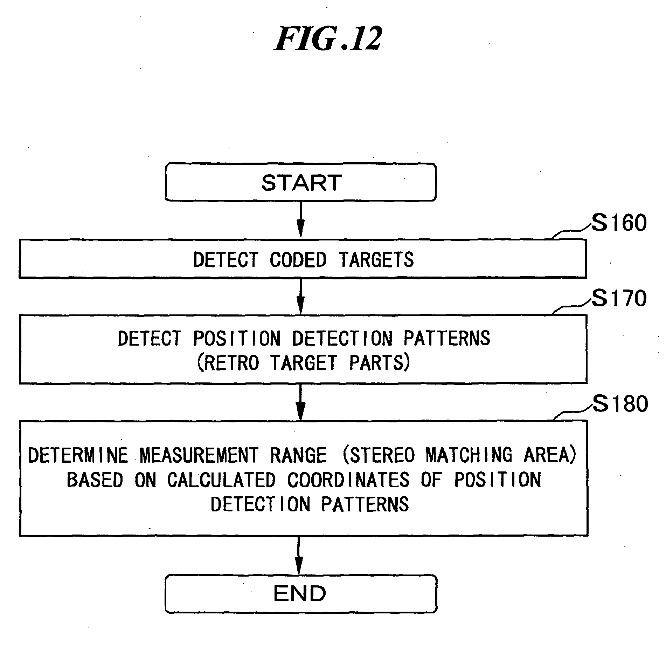

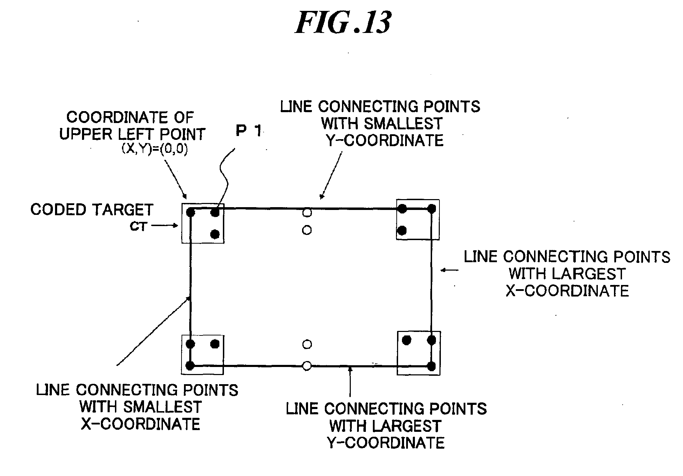

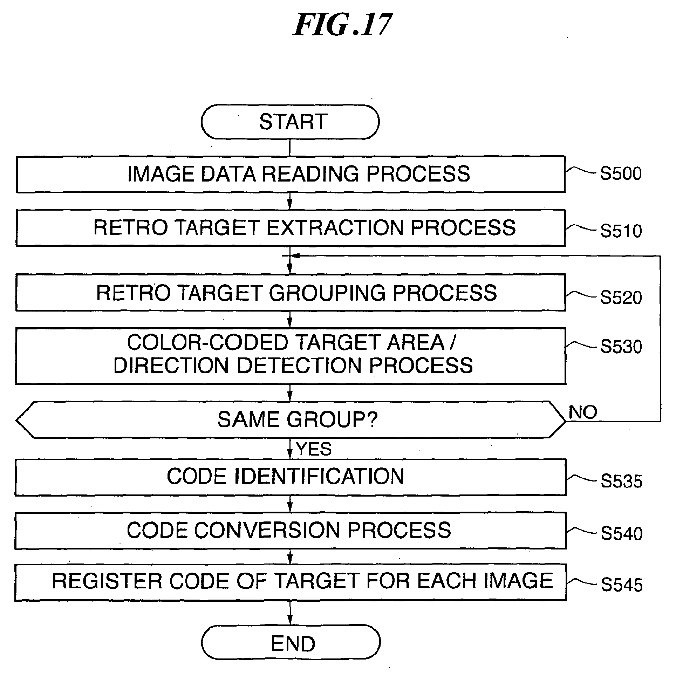

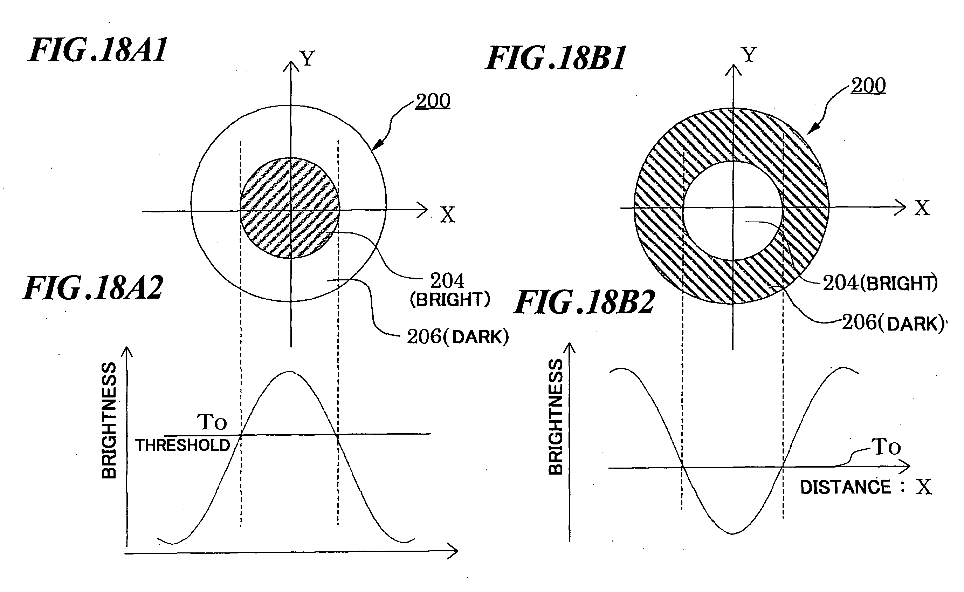

FIG. 12 is an exemplary flowchart of the process of automatic determination of a stereo matching area. FIG. 13 is a diagram for explaining how a stereo matching area is set. FIG. 13 shows an example in which color-coded targets CT each have three retro targets for position detection. First, color-coded targets CT located at the four corners of a stereo image are extracted (S160). Then, respective retro target parts P1 in the four color-coded targets CT are detected (S170). For the detection of these, refer to the description of FIG. 17 and FIG. 18. Then, based on the coordinate values of the respective retro target parts P1 detected, a measurement area is set by connecting the outermost retro target parts P1 so as to include all the retro target parts P1. That is, assuming the upper left retro target part P1 as the origin (0, 0), a matching area to be measured can be automatically determined by, for example, connecting the points with the smallest Y-coordinate to form the upper horizontal line, connecting the points with the largest Y-coordinate value to form the lower horizontal line, connecting the points with the smallest X-coordinate value to form the left vertical line, and connecting the points with the largest X-coordinate value to form the right horizontal line.

By determining matching areas in this way, overlap between model images can be secured as shown in FIG. 7B. That is, by arranging color-coded targets CT in the vicinity of the four corners of a screen and always determining the area connecting the outermost retro targets included in these color-coded targets CT as a matching area, it is possible to determine a stereo matching area automatically while securing overlap between model images. In this case, each color-coded target CT needs to include at least two position detection patterns (retro target parts) P1 (in case of two patterns, they must be arranged diagonally) in order to automatically set a matching area.

In case of fully automatic processing, with a large number of codes identified, photographing can be performed in an arbitrary order per pair of images (typically stereo image) as a base unit while securing overlap between adjacent images. With a fixed photographing order, automation is possible even with a small number of codes identified. In this case, only color-coded targets CT included in two (overlapping) images photographed in stereo need to be identified. A three-dimensional measurement (stereo measurement) is performed (S50) on an area where the matching area is determined (S45). For three-dimensional measurement, an image correlation process using a cross-correlation factor method is used, for example. The image correlation process is performed using the functions of the correlating section 40 (the extraction section 41, the reference point setting section 42, the corresponding point search section 43, etc.) and through calculation processing by the three-dimensional coordinate data calculation section 51.

The three-dimensional coordinates of the measuring object 1 are obtained through calculation processing by the three-dimensional coordinate data calculation section 51, and are stored in the three-dimensional coordinate data storage section 53. The stereoscopic two-dimensional image forming section 54 creates a stereoscopic two-dimensional image of the measuring object 1 based on the three-dimensional coordinates obtained by the three-dimensional coordinate data calculation section 51 or read from the three-dimensional coordinate data storage section 53, and the stereoscopic two-dimensional image storage section 55 stores the stereoscopic two-dimensional image. The stereoscopic two-dimensional image display section 57 displays on the display device 60 a stereoscopic two-dimensional image viewed from an arbitrary direction based on the information stored in the stereoscopic two-dimensional image storage 55.

Such a stereoscopic two-dimensional image of the measuring object 1 on the screen can show a perspective view thereof as viewed from an arbitrary direction, and also a wire-framed or texture-mapped image thereof. Texture-mapping refers to affixing texture that produces a stereoscopic effect to a two-dimensional image of the measuring object 1.

Automatic measurement can be performed in this way through photographing (S10) to three-dimensional measurement (S50), to obtain the three-dimensional coordinates of the measuring object 1 and display a stereoscopic image on the display device 60.

[Utilization of projection device]

In this embodiment, the projection section (projector) 12 is utilized in the basic process flow described above to allow the following processes:

(a) The projector 12 lights up the range to be photographed by the camera, and the stereo camera 10 is adjusted to photograph the range.
Color-coded targets CT may be arranged at the four corners of a projection pattern, to indicate the photographing range (overlap photographing range) and to allow connection of adjacent images.
(b) The projector 12 projects texture light (only light), and the camera 10 photographs a stereo image pair as an image for texture of one model image (image of the measuring object).

(c) For preparation before measurement, the projector 12 projects a measurement preparation pattern, which is photographed in stereo. A grid pattern or a pattern with a large number of small circles arranged in an array such as shown in FIG. 16 may be used as the measurement preparation pattern. Any pattern may be used that allows visual recognition, or calculation, of the shape of the measuring object 1. The check is performed visually or by calculation. Since the projection pattern is deformed according to the shape of the measuring object 1, the approximate shape of the measuring object 1 can be grasped by checking which points in the pattern are displaced.

Reference points RF may be affixed to the displaced points extracted from the preparation before measurement. Alternatively, other action may be taken such as increasing the number of measurement points Q (including orientation points). The size, number and arrangement of the orientation points can be calculated to reflect the calculation results in the actual pattern projection.

In the preparation before measurement, the check for displaced points may be performed along with approximate measurement. That is, a photographed image is sent via the pattern detection section 491 to the orientation section 44 to calculate orientation. When the number of measurement points for the preparation before measurement is large enough, the projected orientation points may be used as measurement points to complete the measurement process.

(d) In the orientation process, the projector 12 projects color-coded targets CT and reference points RF. Here, color-coded targets CT are affixed to irradiated positions. If already affixed in the preparation before measurement, color-coded targets CT are affixed to other points. The affixation is not necessary if the measurement is performed using the projected pattern. In such a case, the projected pattern is photographed in stereo and utilized again in the orientation process.

(e) In the three-dimensional measurement, a pattern for measurement is projected by the projector 12. In this case, a random pattern is irradiated for stereo matching, for example. Since the required accuracy for a pattern for measurement is calculated beforehand based on the camera condition, a pattern for measurement with the size satisfying the accuracy is irradiated. The irradiated pattern for measurement is photographed in stereo, and utilized in three-dimensional measurement.

(f) When moving on to a next photographing position, the projector 12 may approximately navigate to the next photographing position.

The above processes can be fully automated. In that case, the affixing work is not performed, but the preparation before measurement is performed, the orientation is determined and the three-dimensional measurement is performed, using only the projection pattern from the projector.

FIG. 14 is an exemplary flowchart of the measurement utilizing the projection device. The projector 12 projects a first measurement pattern (such as a preliminary measurement pattern), and based on the deformation of the projected pattern, a second measurement pattern (such as an accurate measurement pattern) is formed and projected.

First, the photographing condition is input (S200). The photographing section 10 includes an optical system with a variable focal length. The photographing condition may be the camera parameters of the photographing section 10, such as the number of pixels of the digital camera used, the approximate pixel size, the focal length, the photographing distance, the baseline length and the overlap ratio. When any one of the camera parameters is input, the in-plane resolution, the depth resolution, the angle of view, the measurement area, etc. can be calculated. That is, the projection section 12 can set the range of a pattern to be projected, according to the range photographed by the photographing section 10. This allows adjustment of the arrangement and the density of measurement points in the preliminary measurement pattern. In addition, when the side lap ratio, the size of the area desired to be measured, etc. are input, the number of images to be photographed can be calculated. When the camera parameters, the required accuracy (pixel resolution), etc. are input, the photographing distance, the baseline length, etc. can be calculated.

Then, the camera parameters are calculated based on the input condition (S210). At this time, based on the condition, the in-plane pixel resolution, the depth resolution, the size of the measurement range in a stereo image pair, the number of images required to obtain an image of the entire measuring object, etc. are calculated.

The in-plane resolution and the depth resolution can be calculated by the following equations (where the asterisk "*" represents a multiplication operator):

```
Δxy (in-plane resolution) = δp (pixel size) * H (photographing

distance) / f (focal length)
```

```
Δz (depth resolution) = δp * H * H / (f * B (baseline: inter-camera

distance))
```

Then, the position and the projecting condition of the projector 12 are set to be consistent with the calculation results of the camera parameters of the photographing section 10 (S220).

Then, the projector 12 is switched to a photographing range indication mode, to project the range to be photographed by the camera 10 (S230). For the projection, light may be cast onto the range only to be photographed by the left and right stereo cameras 10. In this case, the range to be lighted up or indicated is automatically calculated from the condition input beforehand and the angle of view of the projector 12 used. The effective range where orientation can be determined and three-dimensional measurement can be performed is determined based on the overlapping range between the left and right photographing ranges. The overlap photographing range indication pattern indicates the overlapping range (overlapping part) between stereo images, and is formed as follows. The pattern projection control section 493 projects four color-coded targets CT, which are set to be arranged at the four corners of the overlapping range as shown in FIG. 7A, and the pattern forming section 492 forms the pattern in this arrangement as an overlap photographing range indication pattern. This overlap photographing range indication pattern is projected over various measurement patterns, or various measurement patterns are projected with four color-coded targets CT added thereto in the same positions as in the overlap photographing range indication pattern. Then, photographing can be performed to obtain a series of stereo images of the entire measuring object such that each stereo image includes four color-coded targets CT and hence adjacent images are connectable.

Then, the camera position is set such that the projected range is photographed over approximately the entire screen (S240). At this time, the camera position is set such that the four color-coded targets CT in the overlap photographing range indication pattern are securely included in the left and right stereo photographing screens. Since the approximate camera position is already known from the condition input beforehand, such camera condition may be projected onto the measuring obj ect for checking purposes.

Then, with the projection mode switched to the texture lighting mode, the projector 12 projects texture light (S245). The texture light does not have a pattern of shapes, but is uniform light cast onto an object. The texture light is also effective to consider which parts of the measuring object 1 targets are affixed to. In case where only light is cast onto the photographing range in the projection process (S230), this work is not necessary.

Then, one model (a stereo pair; two images) is photographed as an image for texture (first photographing; S250). When a texture image is not necessary, this photographing can be omitted. It is also possible to modify the color in the color-coded target CT to be projected by the projection section 12, based on the color obtained from the photographed image of the pattern projected in the texture lighting mode. The modification is performed by the pattern forming section 492 utilizing the color modification section 494, for example. The pattern projection control section 493 causes the projection section 12 to project the modified measurement pattern.

The above processes should be performed before the process flow of FIG. 5, at latest before the photographing (S10).

Next, the preparation before measurement (preliminary measurement) (S255) is described. The reason for performing the preparation before measurement is to determine actual orientation and perform actual three-dimensional measurement efficiently. Thus, the preparation before measurement is not necessarily performed for some objects. Once the preparation before measurement is performed on an object, it is not necessary for similar objects.

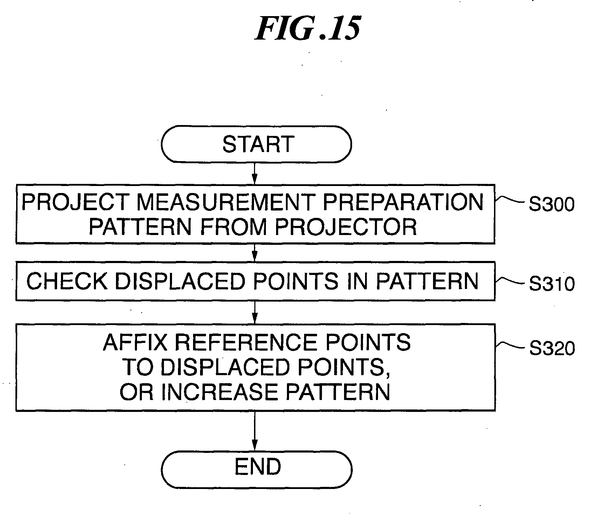

FIG. 15 is an exemplary flowchart of the preparation before measurement (S255). The preparation before measurement (S255) is performed before the photographing (S10) of FIG. 5. First, with the projection mode of the projector switched to a measurement mode, a measurement preparation pattern is projected (S300). The measurement preparation pattern is one form of measurement pattern P. FIG. 16 shows examples of measurement preparation pattern. FIG. 16A shows a pattern with a large number of small circles arranged in an array (which is referred to as "small circle pattern"), and FIG. 16B shows a grid pattern. The measurement preparation pattern is not limited to these, but any pattern may be used that allows visual recognition, or calculation, of the shape of the measuring object 1. That is, any pattern may be used that represents the ups and downs, or the shape, of the entire measuring object at appropriate intervals. In case of a small circle pattern or a grid pattern, the projected pattern is deformed according to the shape of the measuring object 1. Thus, displacement of the measurement points can be found by checking which points in the pattern are displaced, and the approximate shape of the measuring object 1 can be grasped. Here, the term "displacement" refers to the displacement of a measurement point in a measurement pattern from a projected point corresponding to that measurement point when the measurement pattern is projected onto a plane perpendicular to the projected light.

Since the photographing condition is input in the photographing condition input process (S200), the value may be used to calculate the size, number and arrangement of orientation points, so that the pattern forming section 492 can form a measurement pattern and the pattern projection control section 493 can cause the projection section 12 to project the formed measurement pattern. In addition, reference points RF, color-coded targets CT or objects of a different shape may be attached at or substituted for the intersections of a grid, the centers of gravity of small circles, etc. to form a measurement preparation pattern.

Then, displaced points in the pattern are checked (S310). The check is performed visually or by calculation. Since the purpose here is to preliminarily estimate the rough shape, visual check is sufficient in most cases. In case of calculation, the pattern detection section 491 detects displacement of the intersections of a grid or the centers of gravity of small circles based on the photographed image from the stereo camera 10. The intersections of a grid or the centers of gravity of small circles are included in the measurement points. For example, the intersections of a grid and the centers of gravity of small circles that are not equally spaced may be detected as displaced points (points where displacement occurs). In case of a small circle pattern, a center of gravity detection algorithm is used to detect the centers of gravity for position measurement. In this way, assuming the measurement preparation pattern as a first measurement pattern P and the intersections of a grid or the centers of gravity of small circles as measurement points Q, the pattern detection section 491 can detect displacement of the measurement points in the first measurement pattern.

When displaced points (points where displacement occurs) are detected, reference points are affixed to the displaced points, or reference points are added to the measurement preparation pattern (S320). In case of a visual check, reference points may be affixed at the moment when displaced points are checked. In case of automated processing, reference points are added to the measurement preparation pattern according to the magnitude of displacement, that is, the magnitude of deformation.

As a result of the preparation before measurement described above, displaced points in the pattern can be found beforehand, allowing targets to be affixed to the measuring object 1 as reference points. Also, a projection pattern added with reference points can be created, or reference points in the vicinity of the displaced points can be increased. This allows effective orientation and three-dimensional measurement. To create a projection pattern added with reference points, the pattern forming section 492 forms a second measurement pattern added with measurement points based on the displacement of measurement points in the first measurement pattern detected by the pattern detection section 491.

Then, turning to the flowchart of FIG. 14, color-coded targets CT and reference points RF are projected (S260). This process corresponds to S01 of FIG. 5. In case where preparation before measurement is performed, reference points RF have been increased, as a result, to the displaced points of the measuring object 1, or points corresponding to the displaced points in the measurement pattern P. Here, color-coded targets CT are affixed at irradiated positions of the measuring object 1. If already affixed in the preparation, color-coded targets CT are affixed at other points. The affixation is not necessary if measurement is performed using the projected measurement pattern P.

Then, stereo photographing is performed (second photographing; S270). This process corresponds to S10 of FIG. 5. The second photographing is performed such that the resulting image includes the color-coded targets CT and the reference points RF affixed to the measuring object or added to the measurement pattern. The photographed image obtained through the second photographing is used in orientation and the orientation is determined efficiently (S275, which corresponds to S11 to S30 of FIG. 5). In case that orientation is determined with the measurement pattern used in the second photographing as the first measurement pattern where new displaced points (where displacement occurs) are found from among the orientation points (included in the measurement points) and the reference points are increased in the vicinity of the displaced points, the pattern detection section 491 detects displacement of measurement points in the first measurement pattern, and the pattern forming section 492 forms a second measurement pattern added with measurement points based on the displacement.

Then, with the projection mode switched to a random pattern mode, for example, a measurement pattern for three-dimensional measurement is projected (S280). This process corresponds to S01 of FIG. 5. In this case, a random pattern is irradiated for stereo matching (three-dimensional measurement), for example. Since the required accuracy for a measurement pattern is calculated beforehand based on the camera condition, a measurement pattern with the size satisfying the accuracy is irradiated. In case where preparation before measurement is performed, reference points have been increased around the displaced points also in the measurement pattern.

Then, stereo photographing is performed (third photographing; S290). This process corresponds to S10 of FIG. 5. The third photographing is performed such that the resulting image includes the color-coded targets CT and the reference points RF affixed to the measuring object or added to the measurement pattern. The photographed image obtained through the third photographing is used in three-dimensional measurement and the shape measurement is performed efficiently (S295, which corresponds to S42 to S50 of FIG. 5). In case that three-dimensional measurement is performed with the measurement pattern used in the third photographing as the first measurement pattern where new displaced points (where displacement occurs) are found from among the measurement points and the reference points are increased in the vicinity of the displaced points, the pattern detection section 491 detects displacement of the measurement points in the first measurement pattern, and the pattern forming section 492 forms a second measurement pattern added with measurement points based on the displacement.

When measurement is performed at this position, the position is moved to a next photographing position (S298). That is, the process returns to S220 (in some cases, to S200) to repeat photographing until three-dimensional data on the entire measuring object can be obtained.

At this time, the projector may navigate to the next photographing position. The term "navigate" refers to, for example, selecting the number and arrangement of orientation points based on how the projected grid pattern is distorted and performing rough measurement, to consider the arrangement of orientation points or to search a mismatch area and consider increasing orientation points in the area. That is, the navigation results may determine the position where the pattern is affixed or projected.

In forming the second measurement pattern, the measurement points may be reduced or changed. For example, the reference points may be changed to color-coded targets, the color code patterns of the color-coded targets may be changed, or measurement points in the vicinity of characteristic points may be moved to the characteristic points. The reference points may be reduced, or bad orientation points may be deleted, in order to return to the previous stage to perform measurement.

The processes of FIG. 14 can be fully automated. In that case, the affixation of targets is not performed, but the preparation for measurement, the orientation is determined and the three-dimensional measurement is performed using only the projection pattern projected from the projector. The process flow of FIG. 5 can also be fully automated if the affixation of color-coded marks (S01) is replaced by the projection of color-coded marks utilizing a projection device.

[Color-coded target detection flow]

Next, description is made of the color-coded target detection flow. Detection of color-coded targets is performed manually or automatically. When performed automatically, the process may be performed differently depending on the number of colors identified in the color-coded targets CT or the photographing method. First of all, description is made of the case where a large number of colors are identified in the color-coded targets CT. In this case, there is no restriction on the photographing order, allowing fully automatic processing.

FIG. 17 is an exemplary flowchart of the detection of color-coded targets. The flowchart is an example of the processes of S14 and S15 of FIG. 5.

First, color images to be processed (photographed images or model images) are read into the read image storage section 141 of the extraction section 41 (S500). Then, color-coded targets CT are extracted from each read image (S510).

Various search methods may be used such as (1) to search for a position detection pattern (retro target) P1 in a color-coded target CT, (2) to detect the chromatic dispersion of a color code part P3, (3) to use a colored position detection pattern, etc.

(1) In case where the color-coded target CT includes a retro target, that is, in case where a pattern with a sharp contrast in brightness is used, the retro target can be easily detected by photographing the object with a camera stopping down the aperture and using a flash to obtain an image in which only the retro target is gleaming, and binarizing the obtained image.

FIG. 18 is a diagram for explaining the detection of the center of gravity using a retro target. FIG. 18A1 shows a retro target with a bright inner circular portion 204 and a dark outer circular portion 206, FIG. 18A2 shows the brightness distribution in a diametrical direction of the retro target of FIG. 18A1, FIG. 18B1 shows a retro target with a dark inner circular portion 204 and a bright outer circular portion 206, and FIG. 18B2 shows the brightness distribution in a diametrical direction of the retro target of FIG. 18B1. In case where a retro target has a bright inner circular portion 204 as shown in FIG. 18 A1, the center of gravity of the retro target in a photographed image of the measuring object 1 reflects a large amount of light and thus is bright. Therefore, light distribution in the image is as shown in FIG. 18A2, allowing the inner circular portion 204 and the center position of the retro target to be found based on a threshold To of light distribution.

When the range where the target lies is determined, its center of gravity is calculated by, for example, the method of moments. For example, the retro target 200 shown in FIG. 18A1 is assumed to be represented by plane coordinates (x, y). Then, calculations are performed for points in x and y directions at which the brightness of the retro target 200 is at the threshold To or more, using [Equation 1] and [Equation 2]:

$$xg = \{\Sigma x * f(x, y)\} / \Sigma f(x, y) \quad \text{----[Equation 1]}$$

$$yg = \{\Sigma y * f(x, y)\} / \Sigma f(x, y) \quad \text{----[Equation 2]}$$

where (xg, yg) represents the coordinates of the center of gravity, and f(x, y) represents the brightness value at coordinates (x, y).

In case where a retro target 200 shown in FIG. 18B1 is used, calculations are performed for points in x and y directions at which the brightness is at the threshold To or less, using [equation 1] and [Equation 2].

In this way, the center of gravity of the retro target 200 can be found.

(2) Normally, a color code part of a color-coded target CT uses a large number of code colors and has a large chromatic dispersion value. Thus, a color-coded target CT can be detected by finding a part with a large dispersion value from an image.

(3) Retro targets at three corners of a color-coded target CT are given different colors so that the respective retro targets reflect different colors. Since retro targets at three corners are given different colors, the respective retro targets of the color-coded target can be easily discriminated. In grouping retro targets, even though there are many retro targets to be used, the grouping process can be made easy by selecting most closely located retro targets of different colors as candidates for retro targets of a group.

In case of using a large number of retro targets as reference points RF, retro targets of color-coded targets CT and retro targets as separate units exist as mixed. In such a case, colored retro targets may be used in color-coded targets and white retro targets may be used as separate units, allowing easy discrimination.

Here, an example of the case (1) is described. In FIGs. 4 and 17, a retro target detection processing section 111 stores in the read image storage section 141 the coordinates of plural retro targets detected from a color image. Then, the retro target grouping processing section 120 groups those retro targets detected by the search processing section 110 and determined as belonging to the same color-coded target CT based on the coordinates of the retro targets stored in the read image storage section 141 (for example, those located in the color-coded target CT in terms of the coordinates) as candidates for retro targets belonging to the same group, and the read image storage section 141 stores such a group of candidates (a group of three retro targets) (S520). Verification can be made, for example, by measuring the distances between the three retro targets detected in a color-coded target CT and the angles of a triangle formed by connecting the three retro targets (see S530).
In addition, the pattern of the detected color-coded target CT may be compared with the color-coded target correlation table 142 to verify which type of color-coded target it is.

Then, the area / direction detection processing section 131 of the color-coded target detection processing section 130 finds the area and the direction of the color-coded target CT by a group of retro targets based on the centers of gravity of the retro targets stored in the read image storage section 141 (S530). Before or after the area and the direction are determined, the color detection processing section 311 detects the colors of the reference color part P2, the color code part P3, and the measuring object 1 in the image. If necessary, the color correction section 312 may correct the colors of the color code part P3 and the measuring object 1 in the image with reference to the color of the reference color part P2. In case where a color-coded target printed in a color which can not be used as a reference is used, its reference color part is also corrected. Then, the verification processing section 313 verifies whether or not the grouping has been performed properly, that is, whether or not the centers of gravity of the retro targets once grouped into the same group do belong to the same color-coded target CT. If they are discriminated as belonging to the same group, the process proceeds to the next, identification code determination process (S535), and if not, the process returns to the grouping process (S520).

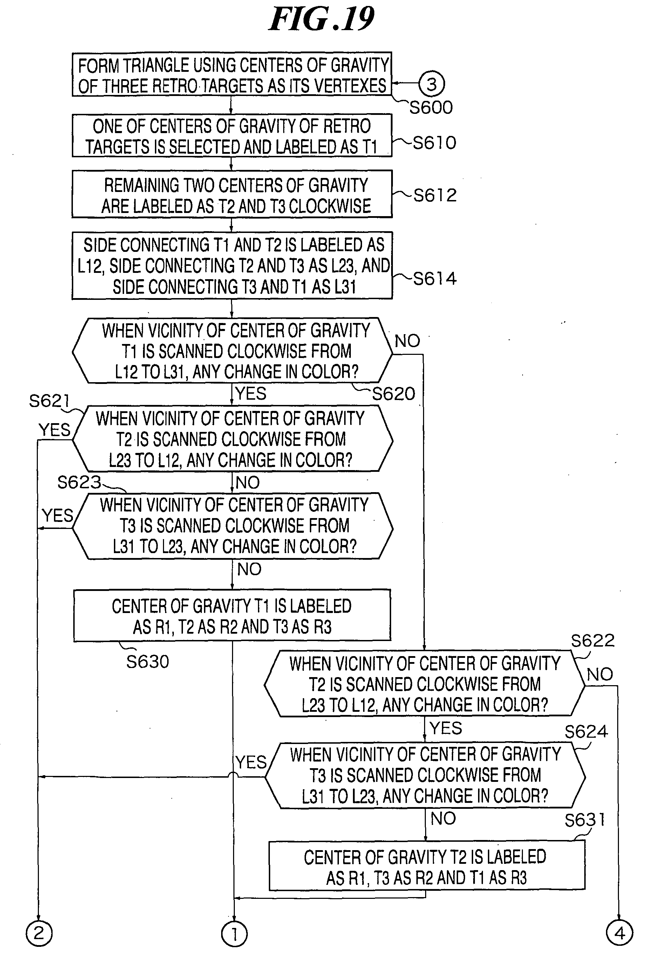

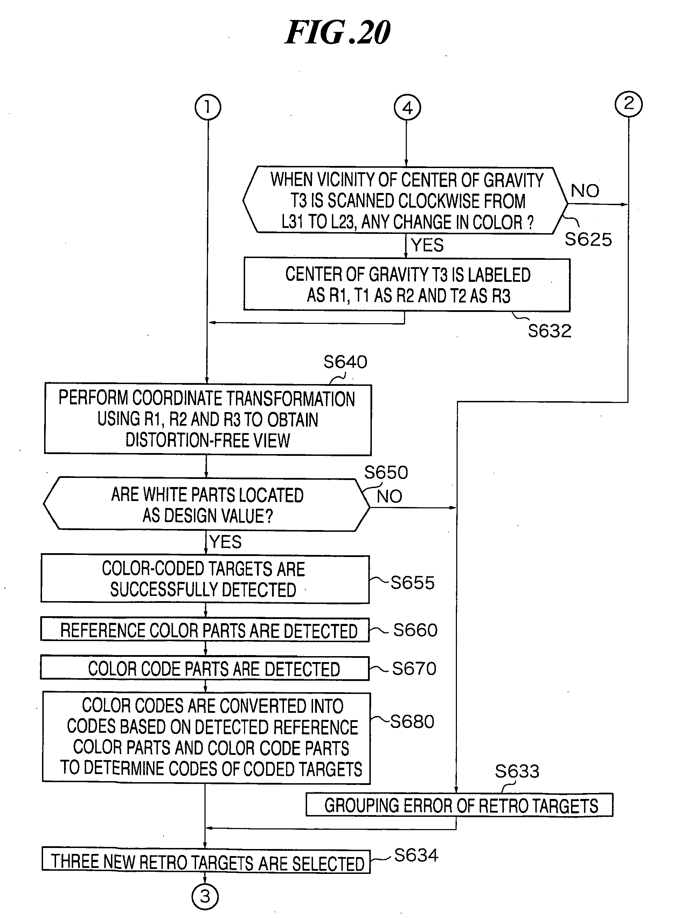

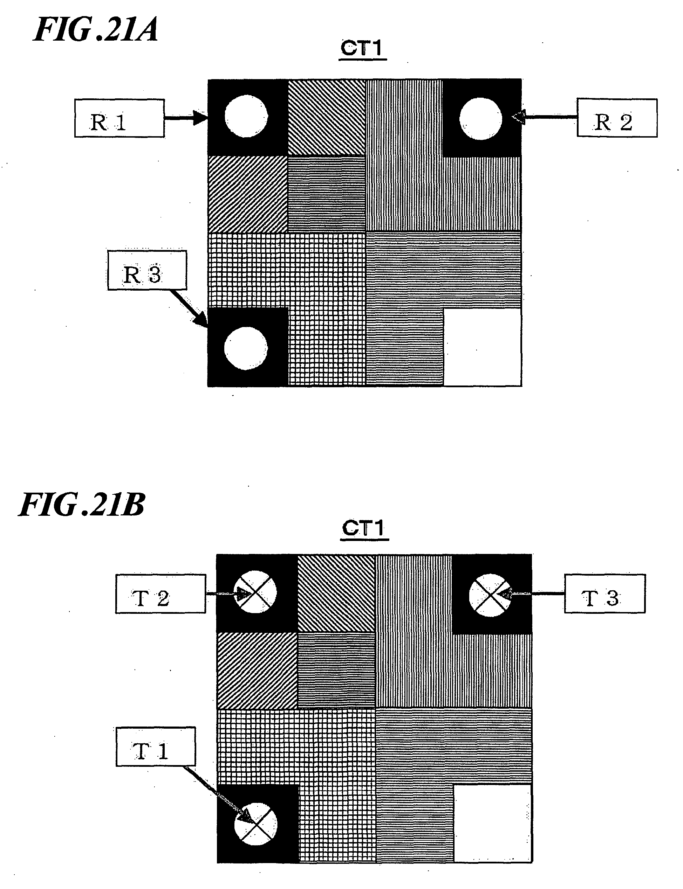

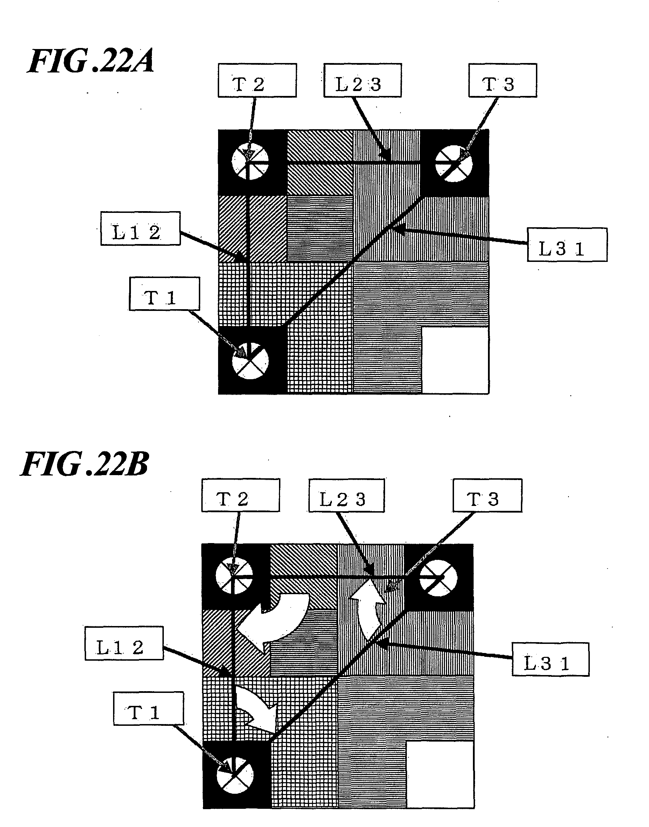

FIGs. 19 and 20 show an exemplary flowchart of the process by the color-coded target area / direction detection processing section 131. And, with reference to FIGs. 21 and 22, an explanation is made of how codes are read using retro targets. Here, description is made of the procedure for reading codes from the color-coded target CT1 of FIG. 3A. In order to read codes from the color-coded target CT1, it is necessary to know the area and the direction of the color-coded target CT1. For that purpose, the centers of gravity of the three position detection retro targets are labeled as R1, R2 and R3 (see FIG. 21A).

For labeling, a triangle is created using as its vertexes the centers of gravity R1 to R3 of the subject three retro targets (S600). One of the centers of gravity R1 to R3 of the three retro targets is selected arbitrarily and labeled tentatively as T1 (S610), and the remaining two centers of gravity are labeled tentatively as T2 and T3 clockwise (S612; see FIG. 21B). Then, the sides connecting the respective centers of gravity are labeled. The side connecting T1 and T2 is labeled as L12, the side connecting T2 and T3 is labeled as L23, and the side connecting T3 and T1 is labeled as L31 (S614; see FIG. 22A).

Then, the interior of the triangle is scanned in the manner of an arc to obtain the values of pixels distanced by a radius R from each vertex (center of gravity) in order to see changes in color over the scanned range (see FIG. 22B). Scanning is performed clockwise from L12 to L31 on the center of gravity T1, clockwise from L23 to L12 on the center of gravity T2, and clockwise from L31 to L23 on the center of gravity T3 (S620 to S625).
The radius is determined by multiplying the size of the retro target on the image by a multiplication factor depending on the scanning angle. In case where the retro target is photographed from an oblique direction and hence looks oval, the scanning range is also determined as oval. The multiplication factor is determined according to the size of the retro target and the distance between the center of gravity of the retro target and the reference color part P2.

The process of verifying the labeling is performed by the verification processing section 313. The center of gravity with changes in color as a result of scanning is labeled as R1, and the remaining two centers of gravity are labeled clockwise from the center of gravity with changes in color as R2 and R3 (S630 to S632). In this example, the center of gravity T2 is labeled as R1, the center of gravity T3 as R2, and the center of gravity T1 as R3. If one center of gravity with changes in color is detected and two centers of gravity with no changes in color are not detected, it is determined as a grouping error of retro targets (S633), three retro targets are selected again (S634), and the process returns to S600. As described above, it is possible to verify whether or not the three selected retro targets belong to the same color-coded target CT1 based on the process results. In this way, the grouping of retro targets is established.
The above labeling method is described taking the color-coded target CT1 of FIG. 3A as an example. However, other types of color-coded target CT can be similarly processed by modifying a part of the process.

[Code identification]

Turning to FIG. 17, in the identification code discrimination section 46, the coordinate transformation processing section 321 transforms the coordinates of the color-coded target CT1 extracted by the extraction section 41 based on the centers of gravity of the grouped retro targets so as to conform to the design values of the color-coded target CT1. Then, the code conversion processing section 322 identifies the color code (S535) and performs code conversion to obtain the identification code of the color-coded target CT1 (S540). The identification code is stored in the read image storage section 141 (S545).

This process flow is described with reference to FIG. 20. A photographed image of the color-coded target distorted due to being affixed to a curved surface, photographed from an oblique direction, etc., is transformed through coordinates into a distortion-free front view using the labels R1, R2 and R3 (S640). The coordinate transformation makes it easier to discriminate the retro target part P1, the reference color part P2, the color code part P3 and the white part P4 with reference to the design values of the color-coded target, and facilitates subsequent processing.

Then, it is checked whether or not a white part P4 is located on the coordinate-transformed color-coded target CT1 as specified by the design values (S650). If not located as specified by the design values, it is determined as a detection error (S633). If a white part P4 is located as specified by the design values, it is determined that a color-coded target CT1 has been detected (S655).

Then, the color code of the color-corrected color-coded target CT1 with known area and direction is discriminated.

The color code part P3 expresses a code using a combination of colors distributed to respective unit areas. For example, in case where the number of code colors is "n" and there are three unit areas, $n \times n \times n$ codes can be expressed. Under the condition that the unit areas do not have redundant colors, $n \times (n-1) \times (n-2)$ codes can be expressed. Under the condition that there are "n" unit areas and they do not use redundant colors, n factorial kinds of codes can be expressed. The code conversion processing section 322 of the identification code discrimination section 46 compares the combination of colors of the unit areas in the color code part P3 with the combination of colors in the color-coded target correlation table 142 to discriminate an identification code.

There are two ways to discriminate colors: (1) a relative comparison method by comparison between the colors of the reference color part P2 and the colors of the color code part P3, and (2) an absolute comparison method by correcting the colors of the color-coded target CT1 using the colors of the reference color part P2 and the color of the white part P4, and discriminating the code of the color code part P3 based on the corrected colors. For example, in case where a small number of colors are used in the color code part P3, the reference colors are used as colors to be compared with for relative comparison, and in case where a large number of colors are used in the color code part P3, the reference colors are used as colors for calibration purposes to correct the colors, or as colors to be compared with for absolute comparison. As described before, the color detection processing section 311 performs color detection, and the color correction section 312 performs color correction.

The code conversion processing section 322 of the identification code discrimination section 46 detects the reference color part P2 and the color code part P3 using either color discrimination method (1) or (2) (S660, S670), discriminates the colors of the color code part P3 (S535 of FIG. 17), and converts them into a code to determine an identification code of the subject color-coded target CT1 (S680; S540 of FIG. 17).

The numbers of the color-coded targets CT1 included in each image are registered in the pattern information storage section 47 (S545 of FIG. 17). The data registered in the pattern information storage section 47 is used in orientation or three-dimensional measurement to achieve improved efficiency.

[Method for projecting three-dimensional measurement pattern]

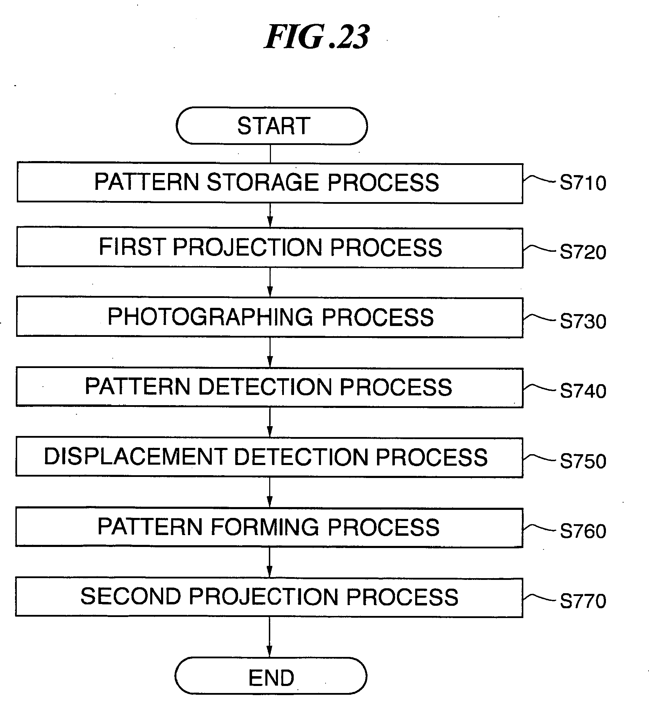

FIG. 23 is an exemplary process flowchart of a method for projecting a three-dimensional measurement pattern (with the execution of the preparation before measurement) according to this embodiment. In this embodiment, a first measurement pattern (such as a preliminary measurement pattern) is projected by the projector 12, and based on the deformation of the projected pattern, a second measurement pattern (such as an accurate measurement pattern) is formed and projected.

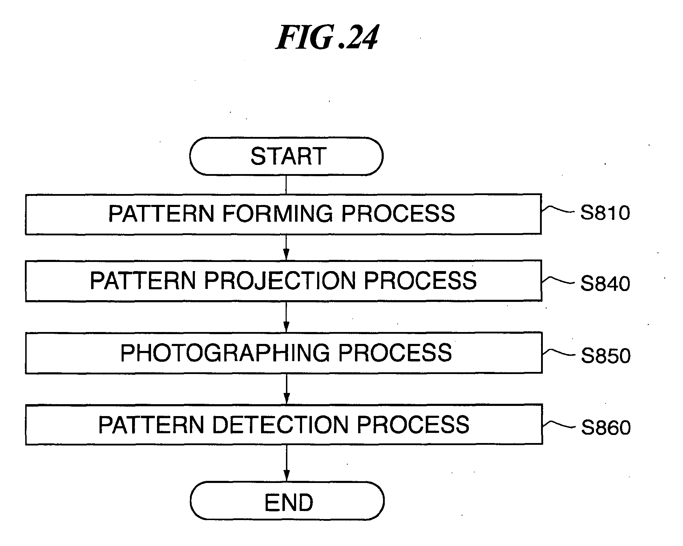

First, a pattern storage section 495 (see FIG. 25) stores plural measurement patterns indicating measurement points on the surface of the measuring object (pattern storage process; S710). In the three-dimensional measurement system 100 as the first embodiment, a measurement pattern is typically formed and projected as described later with reference to FIG. 24. However, the system may include the pattern storage section 4 95 to store the measurement patterns. Then, the pattern projection control section 493 causes the projection section 12 to project one of the plural measurement patterns as a first measurement pattern (first projection process; S720). Then, the photographing section 10 photographs the first measurement pattern projected in the projection process (photographing process; S730). Then, the pattern detection section 491 detects the measurement points from an image of the first measurement pattern photographed in the photographing process (pattern detection process; S740). Then, the pattern detection section 491 detects displacement of the measurement points in the first measurement pattern detected in the pattern detection process (displacement detection process; S750). Then, the pattern forming section 492 forms, based on the detected displacement of the measurement points in the first measurement pattern, a second measurement pattern where the measurement points are increased, deleted or changed (pattern forming process; S760). Then, the pattern projection control section 493 causes the projection section 12 to project the second measurement pattern (second projection process; S770).

By utilizing the projection device to perform preparation before measurement and reconstruct a target pattern for use in orientation or three-dimensional measurement in this way, non-contact three-dimensional measurement can be performed appropriately and automatically on various objects.

FIG. 24 is another exemplary process flowchart of the method for projecting a three-dimensional measurement pattern (projecting color-coded targets) according to this embodiment. In this embodiment, a measurement pattern including color-coded targets is formed, and projected by the projector 12.

First, the pattern forming section 492 forms a measurement pattern including color-coded targets CT having a position detection pattern P1 for indicating a measurement position, and a color code pattern P3 colored with plural colors to allow identification of the targets (pattern forming process; S810). Then, the pattern projection control section 493 causes the projection section 12 to project the measurement pattern formed in the pattern forming process (projection process; S840). Then, the photographing section 10 photographs the measurement pattern projected in the projection process (photographing process; S850). Then, the pattern detection section 492 detects the position detection pattern P1 and the color code pattern P3 from an image of the measurement pattern photographed in the photographing process to identify a color code (pattern detection process; S860).

The use of color-coded targets in this way allows easy identification of the respective targets and automatic connection of images of the measuring object over a wide area, thereby improving the efficiency of and promoting the automation of orientation and three-dimensional measurement.

[Second Embodiment]

An example in which the measurement pattern is formed by the pattern forming section has been described in the first embodiment. Now, the following describes an example in which plural measurement patterns are stored in the pattern storage section, and the measurement pattern most appropriate for the condition is selected by the pattern selection section and projected. Also, the pattern storage section can store the measurement pattern formed by the pattern forming section.

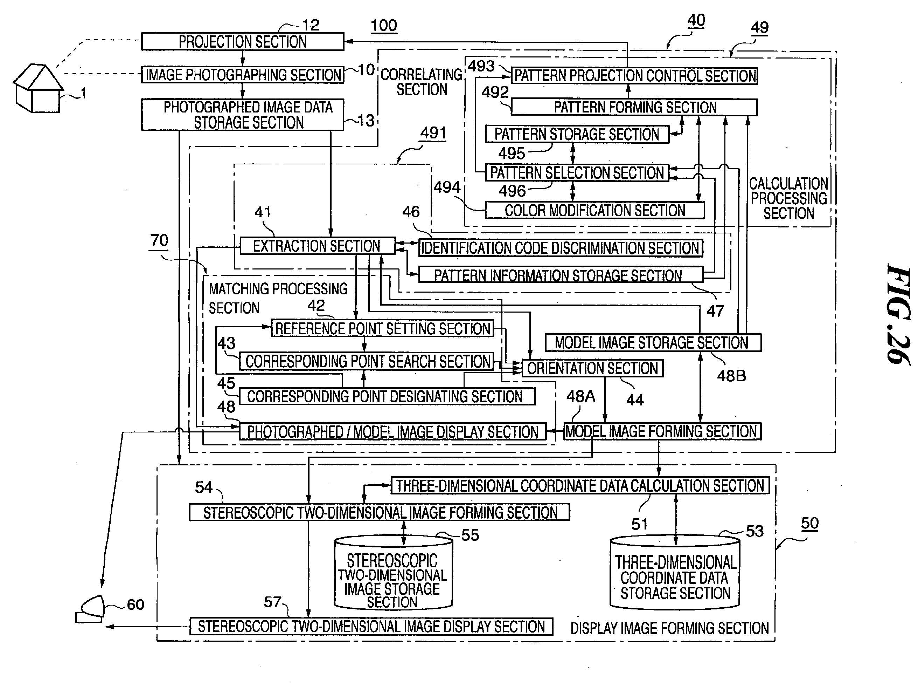

FIG. 25 shows an example of the structure of a pattern projection device for three-dimensional measurement 80A according to this embodiment. FIG. 26 is a block diagram showing the general structure of a three-dimensional measurement system 100A according to this embodiment. A pattern storage section 495 and a pattern selection section 496 are added to the calculation processing section 49, compared to that of the first embodiment. The pattern storage section 495 stores a large number of various patterns, such as a measurement pattern, a random pattern, an overlap photographing range indication pattern and a texture light pattern. The pattern storage section 495 also stores various patterns formed by the pattern forming section 492. The pattern selection section 496 suitably selects a measurement pattern to be projected, out of the measurement patterns stored in the pattern storage section 495. The pattern projection control section 493 controls the projection section 12 to project the measurement pattern selected by the pattern selection section 496. When notified by the pattern detection section 491 that displacement of the measurement points in the first measurement pattern is large, the pattern selection section 496 selects out of the measurement patterns stored in the pattern storage section 495 a measurement pattern with a large number of position measurement patterns at the portion where the displacement has occurred, as a third measurement pattern. The pattern projection control section 493 causes the projection section 12 to project the third measurement pattern selected by the pattern selection section 496. In case where a suitable pattern cannot be found in the pattern storage section 495, the pattern forming section 492 forms a new second measurement pattern where the measurement points are increased at the portion where the displacement has occurred, based on the first measurement pattern. In this case, the pattern projection control section 493 causes the projection section 12 to project the second measurement pattern formed by the pattern forming section 492.

The pattern storage section 495 stores measurement patterns including a color-coded target CT and a monochrome target pattern. These may be of various arrangements and colors. The pattern selection section 496 suitably selects a measurement pattern to be projected, out of the various measurement patterns stored in the pattern storage section 495. The pattern projection control section 493 causes the projection section 12 to project the measurement pattern selected by the pattern selection section 496. The pattern storage section 495 may store pattern elements such as a color-coded target and a monochrome target pattern, and the pattern forming section 492 may edit or form a pattern using these elements. The measurement pattern formed by the pattern forming section 492 may be stored in the pattern storage section 495, so that the pattern projection control section 493 can cause the projection section 12 to project the measurement pattern formed by the pattern forming section 492.

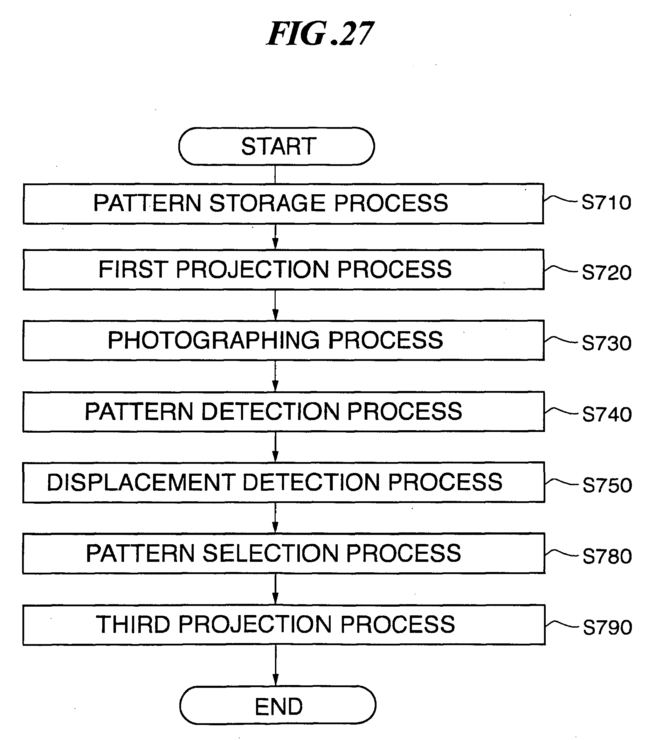

FIG. 27 is an exemplary process flowchart of a method for projecting a three-dimensional measurement pattern (with the execution of the preparation before measurement) according to this embodiment. In this embodiment, the projector 12 projects a first measurement pattern (such as a preliminary measurement pattern), and based on the deformation of the projected pattern, a third measurement pattern (such as an accurate measurement pattern) is selected and projected.

First, the pattern storage section 495 stores plural measurement patterns indicating measurement points on the surface of the measuring object (pattern storage process; S710). Then, the pattern projection control section 493 causes the projection section 12 to project one of the plural measurement patterns as a first measurement pattern (first projection process; S720). Then, the photographing section 10 photographs the first measurement pattern projected in the projection process (photographing process; S730). Then, the pattern detection section 491 detects the measurement points from an image of the first measurement pattern photographed in the photographing process (pattern detection process; S740). Then, the pattern detection section 491 detects displacement of the measurement points in the first measurement pattern detected in the pattern detection process (displacement detection process; S750). Then, the pattern selection section 496 selects, based on the detected displacement of the measurement points in the first measurement pattern, a third measurement pattern where the measurement points are increased, deleted or changed (pattern selection process; S780). Then, the pattern projection control section 493 causes the projection section 12 to project the third measurement pattern (third projection process; S790).

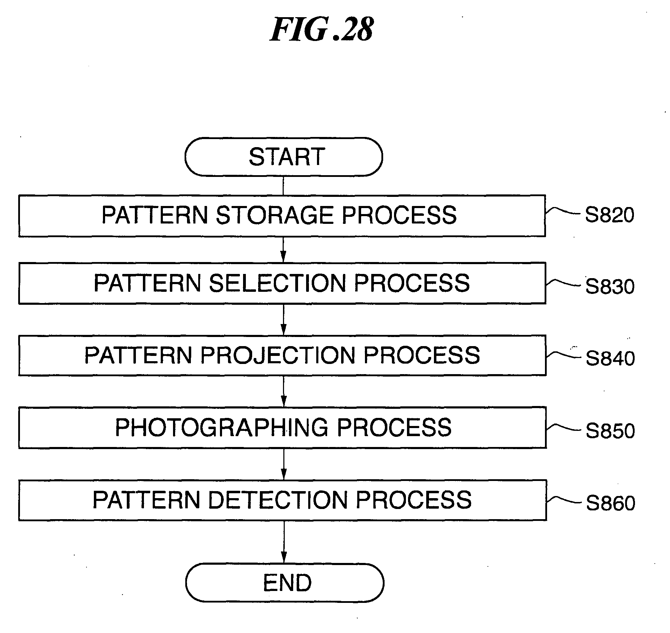

FIG. 28 is an exemplary process flowchart of another method for projecting a three-dimensional measurement pattern (projecting color-coded targets) according to this embodiment. In this embodiment, a measurement pattern including color-coded marks is selected, and projected by the projector 12.

First, the pattern storage section 495 stores plural measurement patterns including color-coded targets CT having a position detection pattern P1 for indicating a measurement position, and a color code pattern P3 colored with plural colors to allow identification of the target (pattern storage process; S820). Then, the pattern selection section 496 selects a measurement pattern to be projected, out of the plural measurement patterns stored in the pattern storage process (pattern selection process; S830). Then, the pattern projection control section 493 causes the projection section 12 to project the measurement pattern selected in the pattern selection process (projection process; S840). Then, the photographing section 10 photographs the measurement pattern projected in the projection process (photographing process; S850). Then, the pattern detection section 492 detects the position detection pattern P1 and the color code pattern P3 from an image of the measurement pattern photographed in the photographing process to identify a color code (pattern detection process; S860).

[Third Embodiment]

In this embodiment, an example is described in which color-coded targets are not used, but only ordinary reference points (retro targets and templates) are used. These reference points include only position detection patterns, and black-and-white retro targets as shown in FIG. 18 are normally used. However, monochrome retro targets may also be used. The pattern forming section 492 forms various projection patterns including measurement patterns containing only these reference points. The pattern storage section 495 stores these various projection patterns. The pattern selection section 496 selects a pattern to be projected, out of the various projection patterns. The pattern projection control section 493 controls the projection section 12 to project the various projection patterns. The pattern detection section 491 detects the reference points from photographed images of the projection patterns. When using retro targets and templates, the centers of gravity thereof can be detected so as to be correlated as reference points and corresponding points in a stereo image. Thus, not only preparation before measurement but also orientation and three-dimensional measurement are possible. All the processes of FIG. 14 can also be performed in this process.

In the system structure of this embodiment, the extraction section 41 can be simplified so as to include only the search processing section 110, and the identification code discrimination section 46 can be omitted, compared to those of the first and second embodiments shown in FIG. 4. In case where color-coded targets are not used, it is preferable to photograph an image including plural points where the coordinates of the measuring object are clear, using a wide-angle projector.

[Fourth Embodiment]

In this embodiment, a method is described in which measurement or approximate measurement is performed at the stage of preparation before measurement (S255: see FIG. 14). The system structure of this embodiment is the same as that in the first or second embodiment.

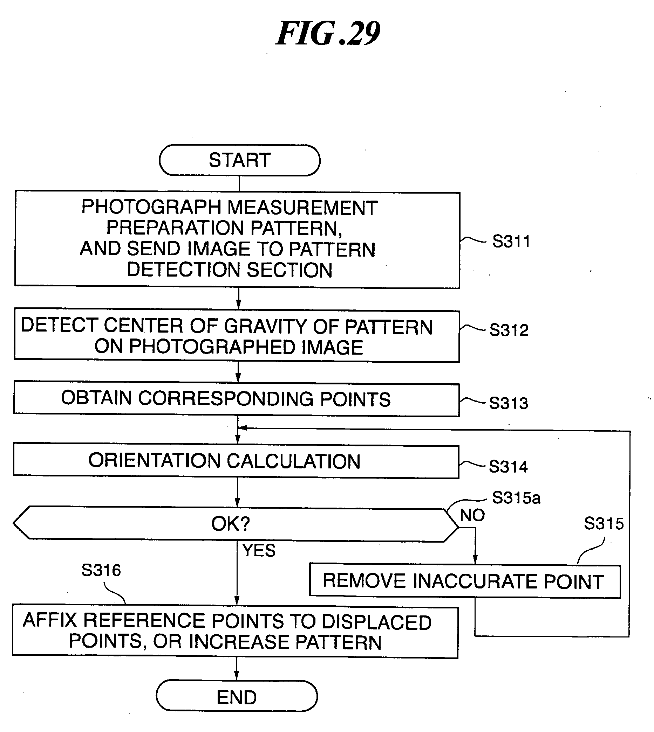

FIG. 29 is a process flowchart of the approximate measurement. First, with the projection mode switched to the measurement mode, the projection section 12 projects a measurement preparation pattern onto the measuring object 1. This projection pattern is photographed by the photographing section 10, and a photographed image is sent to the extraction section 41 (pattern detection section 491) (S311). Then, the extraction section 41 (pattern detection section 491) detects the centers of gravity of the measurement points on the photographed image (S312). Then, the centers of gravity of the measurement points detected in one of a stereo image (reference image) are set as reference points by the reference point setting section 42, and points corresponding to the reference points are obtained in the other of the stereo image (S313). Then, the orientation section 44 calculates orientation (S314). Orientation can be calculated with six or more pairs of reference points and corresponding points. If there is any inaccurate point in the orientation results ("No" in S315a), the inaccurate point is removed (S315), and another six or more pairs are selected to calculate orientation again (S314). The processes of S314 and S315 are repeated until all the inaccurate points are removed. When all the inaccurate points have been removed ("Yes" in S315a), correlation between the camera image and the model image is determined through orientation, and the remaining points after the inaccurate points have been removed are registered in the pattern information storage section 47 as reference points RF. Then, reference points RF in the vicinity of the displaced points are extracted from the registered reference points, and affixed at the positions on the measuring object 1 corresponding to the displaced points, or added to the measurement preparation pattern to form a new measurement pattern P (S316).

If the number of measurement points (including orientation points) in the measurement preparation pattern should be large enough, the projected orientation points may be used as measurement points to complete the measurement process. In this case, the processes after S260 of FIG. 14 are unnecessary.

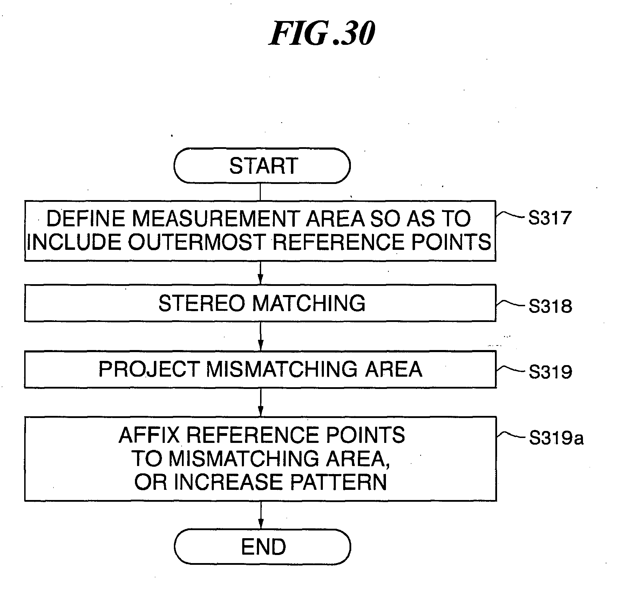

In case where more strictness is required, approximate surface measurement may be performed. FIG. 30 is an exemplary flowchart of the process of approximate surface measurement. The measurement mode is used, for example, to project a measurement pattern with increased reference points. First, a measurement area is defined so as to include the outermost reference points (S317). Then, stereo matching is performed (S318). Then, a mismatching area is projected (S319). Then, reference points are affixed to the mismatching points, or are added to the measurement pattern, to form a new measurement pattern (S319a).

Here, if tie points (for connection purposes; color-coded targets) are affixed beforehand, the process flow of preparation before measurement (S300 to S320) can be repeated to complete measurement of this area, not processing before measurement.

[Fifth Embodiment]

In this embodiment, the number of times of pattern projection is increased. The system structure of this embodiment is the same as that in the first or third embodiment. For example, orientation points may be projected plural times, or measurement points may be projected plural times. In case where mismatching occurs in measurement, orientation points may be increased and projected again for further measurement.

This invention may be implemented as a computer-readable program which causes a computer to execute a method for projecting a three-dimensional measurement pattern or a three-dimensional measurement method described in the embodiments described above. The program may be stored in a built-in memory of the calculation processing section 49, stored in a storage device disposed internally or externally to the system, or downloaded via the Internet. This invention may also be implemented as a storage medium storing the program.

The three-dimensional measurement system or the color-coded target according to this invention described above may also be used as follows.

In the projection device for three-dimensional measurement described above according to the invention, the photographing section 10 may be of a variable focal length, and the projection section 12 may be able to set the projection range of the measurement pattern P according to the photographing range set with the photographing section 10. With this constitution, an appropriate projection range can be set according to the focal length, etc. of the photographing section.

In the projection device for three-dimensional measurement described above according to the invention, the pattern projection control section 493 may cause the projection section 10 to cast uniform light for obtaining texture onto the measuring object. With this constitution, the three-dimensional shape of the measuring object can be approximately grasped, and utilized to design a second measurement pattern or to select a third measurement pattern.

In the projection device for three-dimensional measurement described above according to the invention, the pattern projection control section 493 may be able to adjust the arrangement of measurement points Q in the measurement pattern P and the pattern density when any one of the focal length, the photographing distance, the baseline length and the overlap ratio of the photographing section 10 is input. With this constitution, an appropriate measurement pattern can be selected according to the focal length, etc. of the photographing section.

In a three-dimensional measurement system having the projection device for three-dimensional measurement described above according to the invention, the photographed image may be a stereo image pair, and a matching processing section 70 for performing a pattern matching process of the stereo photographed image may be provided. The matching processing section 70 may perform the pattern matching process using the photographed image of a first measurement pattern projected, and the pattern forming section 492 may add measurement points Q to areas in the first measurement pattern corresponding to bad areas on the photographed image detected in the matching process, to form a second measurement pattern or a third measurement pattern.

Here, the bad areas detected in the matching process refer to areas in which the coordinates of measurement points on the photographed image are greatly different, while the coordinates of most measurement points are in agreement or minimally different, in the matching process of the stereo image. In these areas, accurate measurement has not been performed, and accurate measurement becomes possible by increasing the measurement points. With this constitution, accurate measurement can be achieved with a smaller number of repetitions.

The invention may be implemented as a three-dimensional measurement system having the projection device for three-dimensional measurement described above. With this constitution, the measurement pattern can be optimized, thereby improving the efficiency of orientation and three-dimensional measurement using the optimized measurement pattern. Also, the processes from projection of a measurement pattern to detection of it can be automated, thereby promoting the automation of orientation and three-dimensional measurement.

The method for projecting a three-dimensional measurement pattern according to the invention may include, as shown for example in FIG. 23, a pattern storage process S710 for storing plural measurement patterns P indicating measurement points Q, a first projection process S720 for projecting onto a measuring obj ect a first measurement pattern out of the plural measurement patterns, a photographing process S730 for photographing the first measurement pattern projected in the first projection process S720, a pattern detection process S740 for detecting measurement points from an image of the first measurement pattern photographed in the photographing process S730, pattern forming processes S750, S760 for forming, based on the displacement of measurement points in the first measurement pattern detected in the pattern detection process S740, a second measurement pattern where the measurement points are increased, deleted or changed, and a second projection process S770 for projecting the second measurement pattern onto the measuring object.

With this constitution, the measurement pattern can be optimized, thereby improving the efficiency of orientation and three-dimensional measurement using the optimized measurement pattern. Also, the processes from projection of a measurement pattern to detection of it can be automated, thereby promoting the automation of orientation and three-dimensional measurement.

The method for projecting a three-dimensional measurement pattern according to the invention may include, as shown for example in FIG. 27, a pattern storage process S710 for storing plural measurement patterns P indicating measurement points Q, a first projection process S720 for projecting onto a measuring obj ect a first measurement pattern out of the plural measurement patterns, a photographing process S730 for photographing the first measurement pattern projected in the first projection process S720, a pattern detection process S740 for detecting measurement points from an image of the first measurement pattern photographed in the photographing process S730, pattern selection processes S750, S780 for selecting, based on the displacement of measurement points in the first measurement pattern detected in the pattern detection process S740, a third measurement pattern where the measurement points are increased, deleted or changed out of the measurement patterns stored in the pattern storage process S710, and a third projection process S790 for projecting the third measurement pattern onto the measuring object.

With this constitution, the measurement pattern can be optimized, thereby improving the efficiency of orientation and three-dimensional measurement using the optimized measurement pattern. Also, the processes of projection of a measurement pattern to detection of it can be automated, thereby promoting the automation of orientation and three-dimensional measurement.

In the method for projecting a three-dimensional measurement pattern according to the invention, the image photographed in the photographing process S730 may be a stereo image pair. The method may include, as shown for example in FIG. 5, an orientation process S30 for determining orientation of the stereo image, and a three-dimensional measurement process S50 for measuring the three-dimensional shape of the measuring object. The measurement points added to the second measurement pattern or the third measurement pattern may be projected as reference points in the orientation process S30 or the three-dimensional measurement process S50.

Here, the reference points added to the second measurement pattern or the third measurement pattern may be projected and used for photographing as they are, or used for photographing as affixed at the points projected on the measuring object. With this constitution, reference points can be sequentially increased in the orientation process or the three-dimensional measurement process to proceed to accurate orientation or accurate measurement.

In the projection device for three-dimensional measurement described above according to the invention, the pattern forming section 492 may form a monochrome target pattern including only position detection patterns. With this constitution, the color code pattern may be used for the measurement of reference points and the monochrome target pattern may be used for accurate measurement, for example, thereby improving the efficiency of measurement.

In the projection device for three-dimensional measurement described above according to the invention, the pattern storage section 495 may store a monochrome target pattern including only position detection patterns. With this constitution, the color code pattern may be used for the measurement of reference points and the monochrome target pattern may be used for accurate measurement, for example, thereby improving the efficiency of measurement.

The projection device for three-dimensional measurement described above according to the invention may include a pattern projection control section 493 for controlling the projection section 12 to project a measurement pattern. The pattern projection control section 493 may cause the projection section 12 to project a random pattern in which position detection patterns are arranged at random. It may be possible to switch between a measurement mode in which the measurement pattern is projected, and a random pattern mode in which the random pattern is projected. With this constitution, it is possible to easily switch the orientation and the three-dimensional measurement, for example.

The projection device for three-dimensional measurement described above according to the invention may include a pattern projection control section 493 for controlling the projection section 12 to project a measurement pattern. The pattern projection control section 493 may cause the projection section 12 to project an overlap photographing range indication pattern indicating the overlapping range of a stereo image. It may be possible to switch between a measurement mode in which the measurement pattern is projected, and a photographing range indication mode in which the overlap photographing range indication pattern is projected. With this constitution, it is possible to easily switch between the orientation and the setting of a photographing range, for example.

The projection device for three-dimensional measurement described above according to the invention may include a pattern projection control section 493 for controlling the projection section 12 to project a measurement pattern. The pattern projection control section 493 may be able to adjust the arrangement of measurement points and the pattern density in the measurement pattern when any one of the focal length, the photographing distance, the baseline length and the overlap ratio of the photographing section 10 is input. Here, the measurement points include orientation points. With this constitution, an appropriate measurement pattern can be selected according to the focal length, etc. of the photographing section.

The projection device for three-dimensional measurement described above according to the invention may include a pattern projection control section 493 for controlling the projection section 12 to project a measurement pattern. The pattern projection control section 493 may cause the projection section 12 to cast uniform light for obtaining texture onto the measuring object. It may be possible to switch between a measurement mode in which the measurement pattern is projected, and a texture lighting mode in which the light for obtaining texture is cast. With this constitution, the three-dimensional shape of the measuring object can be approximately grasped through the texture lighting mode.

In the projection device for three-dimensional measurement described above according to the invention, the pattern detection section 491 may include a color modification section 494 for modifying the color in the color-coded target CT to be projected by the projection section 12, based on the color obtained from the photographed image of the pattern projected in the texture lighting mode. With this constitution, the color in the color-coded target can be modified according to the brightness or darkness in the photographed image, thereby facilitating identification of a color code.

The three-dimensional measurement system 100 according to the invention may include the projection device for three-dimensional measurement described above. With this constitution, projection of a color-coded target can facilitate, and also automate, searching a stereo image for corresponding points, connecting adjacent images, and setting a stereo matching area. This also can improve the efficiency of and promotes the automation of orientation and three-dimensional measurement.

The method for projecting a three-dimensional measurement pattern according to the invention may include, as shown for example in FIG. 24, a pattern forming process S810 for forming a measurement pattern P including a color-coded target CT having a position detection pattern P1 for indicating the measurement position, and a color code pattern P3 colored with plural colors to allow identification of the target and located in a predetermined position relative to the position detection pattern P1, a projection process S840 for projecting onto a measuring object the measurement pattern formed in the pattern forming process S810, a photographing process S850 for photographing the measurement pattern projected in the projection process S840, and a pattern detection process S860 for detecting the position detection pattern P1 and the color code pattern P3 based on an image of the measurement pattern photographed in the photographing process S850 to identify a color code.

With this constitution, identification of respective color-coded targets can facilitate, and also automate, searching a stereo image for corresponding points, connecting adjacent images, and setting a stereo matching area. This also can improve the efficiency of and promotes the automation of orientation and three-dimensional measurement.

The method for projecting a three-dimensional measurement pattern according to the invention may include, as shown for example in FIG. 28, a pattern storage process S820 for storing a plurality of measurement patterns P including a color-coded target CT having a position detection pattern P1 for indicating the measurement position, and a color code pattern P3 colored with plural colors to allow identification of the target and located in a predetermined position relative to the position detection pattern P1, a pattern selection process S830 for selecting a measurement pattern to be projected out of the plurality of the measurement patterns P stored in the pattern storage process S820, a projection process S840 for projecting onto a measuring object the measurement pattern selected in the pattern selection process S830, a photographing process S850 for photographing the measurement pattern projected in the projection process S840, and a pattern detection process S860 for detecting the position detection pattern P1 and the color code pattern P3 based on an image of the measurement pattern photographed in the photographing process S850 to identify a color code.

With this constitution, identification of respective color-coded targets can facilitate, and also automate, searching a stereo image for corresponding points, connecting adjacent images, and setting a stereo matching area. This also can improve the efficiency of and promotes the automation of orientation and three-dimensional measurement.

In the method for projecting a three-dimensional measurement pattern described above according to the invention, the pattern forming process S810 may form a monochrome target pattern including only a position detection pattern, and the pattern detection process S860 may detect the monochrome target pattern. With this constitution, the color code pattern may be used for the measurement of reference points and the monochrome target pattern may be used for accurate measurement, for example, thereby improving the efficiency of measurement.

In the method for projecting a three-dimensional measurement pattern described above according to the invention, the pattern storage process S820 may store a monochrome target pattern including only a position detection pattern, and the pattern detection process S860 may detect the monochrome target pattern. With this constitution, the color code pattern may be used for the measurement of reference points and the monochrome target pattern may be used for accurate measurement, for example, thereby improving the efficiency of measurement.

In the projection method for three-dimensional measurement described above according to the invention, the image photographed in the photographing process S850 may be a stereo image pair. The method may include an orientation process S30 for determining orientation of the stereo image, and a three-dimensional measurement process S50 for measuring the three-dimensional shape of the measuring object. In the orientation process S30 or the three-dimensional measurement process S50, the color-coded targets CT may be projected as measurement points indicating the reference positions for measurement, and the monochrome target patterns may be projected as reference points. At the measurement points indicating the reference positions for measurement, target patterns may be projected and used for photographing as they are, or target patterns may be affixed and used for photographing. This constitution can improve the efficiency of measurement.

Embodiments of this invention have been described above. It should be understood that the invention is not limited to the embodiments described above, but various modifications can be apparently made to the embodiments without departing from the scope of the invention. For example, in the above embodiments, the measurement points are increased when forming a second measurement pattern. However, the measurement points may be reduced or changed. The constitution of the color-coded target may be different from those of FIG. 3. For example, the number of color code unit areas may be increased, the position of the reference color part may be changed, the retro target parts may be enlarged, or an alphanumeric character may be given in the white part. In the measurement pattern, in which color-coded targets are typically arranged at the four corners of its rectangular projection range, monochrome target patterns may be arranged therein. The monochrome target patterns may be arranged in various manners, and color-coded targets may be arranged within the arrangement of monochrome target patterns.

A series of images may be photographed such that each photographed image includes four color-coded targets CT and adjacent photographed images share two color-coded targets. The arrangement of the series of photographed images may be determined automatically such that the identification codes of the color-coded targets CT shared by adjacent photographed images coincide with each other. The stereo camera, the projector and the calculation processing section may be constituted integrally with or separately from each other. The pattern detection section of the calculation processing section may be constituted separately from, rather than commonly to, as in the above embodiments, the extraction section, the reference point setting section, the corresponding point search section, etc. within the correlating section.

The use of the terms "a" and "an" and "the" and similar referents in the context of describing the invention (especially in the context of the following claims) is to be construed to cover both the singular and the plural, unless otherwise indicated herein or clearly contradicted by context. The terms "comprising", "having", "including" and "containing" are to be construed as open-ended terms (i.e., meaning "including, but not limited to,") unless otherwise noted or clearly contradicted by context. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

[Industrial Applicability]

This invention is applicable to a system and method for three-dimensionally measuring an object in a non-contact manner.

[Description of Reference Numerals and Symbols]

The main reference numerals and symbols are described as follows:

| | |
|---|---|
| 1: | measuring object |
| 10: | photographing section |
| 12: | projection section (projector) |
| 13: | photographed image data storage section |
| 40: | correlating section |
| 41: | extraction section |
| 42: | reference point setting section |
| 43: | corresponding point search section |
| 44: | orientation section |
| 45: | corresponding point designating section |
| 46: | identification code discrimination section |
| 47: | pattern information storage section |
| 48: | photographed / model image display section |
| 48A: | model image forming section |
| 48B: | model image storage section |
| 49: | calculation processing section |
| 50: | display image forming section |
| 51: | three-dimensional coordinate data calculation section |
| 53: | three-dimensional coordinate data storage section |
| 54: | stereoscopic two-dimensional image forming section |
| 55: | stereoscopic two-dimensional image storage section |
| 57: | stereoscopic two-dimensional image display section |
| 60: | display device |
| 70: | matching processing section |
| 80, 80A: | projection device for three-dimensional measurement |
| 100, 100A: | three-dimensional measurement system |
| 110: | search processing section |
| 111: | retro target detection processing section |
| 120: | retro target grouping processing section |
| 130: | color-coded target detection processing section |
| 131: | color-coded target area / direction detection processing section |
| 140: | image / color pattern storage section |
| 141: | read image storage section |
| 142: | color-coded target correlation table |
| 200: | retro target |
| 204: | inner circular portion |
| 206: | outer circular portion |
| 311: | color detection processing section |
| 312: | color correction section |
| 313: | verification processing section |
| 321: | coordinate transformation processing section |
| 322: | code conversion processing section |
| 491: | pattern detection section |
| 492: | pattern forming section |
| 493: | pattern projection control section |
| 494: | color modification section |

| 495: | pattern storage section |
| 496: | pattern selection section |
| CT, | CT1 - CT3: color-coded target |
| EP: | epipolar line |
| L12, L23, L31: | side |
| P: | measurement pattern |
| P1: | position detection pattern (retro target part) |
| P2: | reference color pattern (reference color part) |
| P3: | color code pattern (color-coded part) |
| P4: | empty pattern (white part) |
| Q: | measurement point |
| R1 - R3: | center of gravity |
| RF: | reference point |
| To: | threshold |
| T1 - T3: | tentative label |

## Claims

1. A projection device for three-dimensional measurement; comprising:

   a projection section for projecting onto a measuring object a measurement pattern indicating measurement points;
   a pattern projection control section for controlling the projection section to project the measurement pattern;
   a pattern detection section for detecting the measurement points from a photographed image of the measurement pattern projected by the projection section; and
   a pattern forming section for forming, based on displacement of the measurement points in a first measurement pattern detected by the pattern detection section, a second measurement pattern where the measurement points are increased, deleted or changed.

2. A projection device for three-dimensional measurement, comprising:

   a projection section for projecting onto a measuring object a measurement pattern indicating measurement points;
   a pattern storage section for storing a plurality of the measurement patterns;
   a pattern selection section for selecting a measurement pattern to be projected, from the plurality of the measurement patterns stored in the pattern storage section;
   a pattern projection control section for controlling the projection section to project the measurement pattern selected by the pattern selection section; and
   a pattern detection section for detecting the measurement points from a photographed image of the measurement pattern projected by the projection section,

   wherein the pattern selection section selects, based on displacement of the measurement points in a first measurement pattern detected by the pattern detection section, a third measurement pattern where the measurement points are increased, deleted or changed, out of the plurality of the measurement patterns stored in the pattern storage section.

3. The projection device for three-dimensional measurement as recited in claim 1 or 2, further comprising:

   a photographing section for photographing the measurement pattern projected by the projection section,

   wherein the pattern detection section detects the measurement points from an image of the measurement pattern photographed by the photographing section.

4. A three-dimensional measurement system comprising:

   the projection device for three-dimensional measurement as recited in any one of claims 1 to 3, wherein the photographed image is a stereo image pair; and

an orientation section for determining orientation of the stereo image pair,

wherein the orientation section determines the orientation using the second measurement pattern or the third measurement pattern.

5. A three-dimensional measurement system comprising:

the projection device for three-dimensional measurement as recited in any one of claims 1 to 3; and
a three-dimensional coordinate data calculation section for calculating three-dimensional coordinates of the measuring object,

wherein the three-dimensional coordinate data calculation section calculates the three-dimensional coordinates using the second measurement pattern or the third measurement pattern.

6. A calculation processing section of a projection device for three-dimensional measurement having a projection section for projecting a measurement pattern onto a measuring object and detecting a predetermined data from a photographed image of the measurement pattern projected onto the measuring object, the calculation processing section comprising:

a pattern projection control section for controlling the projection section to project onto the measuring object a measurement pattern indicating measurement points;
a pattern detection section for detecting the measurement points from a photographed image of the measurement pattern projected by the projection section; and
a pattern forming section for forming, based on displacement of the measurement points in a first measurement pattern detected by the pattern detection section, a second measurement pattern where the measurement points are increased, deleted or changed.

7. A projection device for three-dimensional measurement, comprising:

a pattern forming section for forming a measurement pattern including a color-coded mark having a position detection pattern for indicating a measurement position, and a color code pattern colored with plural colors to allow identification of the mark and located in a predetermined position relative to the position detection pattern;
a projection section for projecting onto a measuring object the measurement pattern formed by the pattern forming section; and
a pattern detection section for detecting the position detection pattern and the color code pattern from a photographed image of the measurement pattern projected by the projection section to identify a color code.

8. A projection device for three-dimensional measurement, comprising:

a pattern storage section for storing a plurality of measurement patterns including a color-coded mark having a position detection pattern for indicating a measurement position, and a color code pattern colored with plural colors to allow identification of the mark and located in a predetermined position relative to the position detection pattern;
a pattern selection section for selecting a measurement pattern to be projected, out of the plurality of measurement patterns stored in the pattern storage section;
a projection section for projecting onto a measuring object the measurement pattern selected by the pattern selection section; and
a pattern detection section for detecting the position detection pattern and the color code pattern from a photographed image of the measurement pattern projected by the projection section to identify a color code.

9. The projection device for three-dimensional measurement as recited in claim 7 or 8, further comprising:

a photographing section for photographing the measurement pattern projected by the projection section,

wherein the pattern detection section detects the position detection pattern and the color code pattern from an image of the measurement pattern photographed by the photographing section to identify a color code.

10. A calculation processing section of a projection device for three-dimensional measurement having a projection section for projecting a measurement pattern onto a measuring object and detecting a predetermined data from a photographed image of the measurement pattern projected onto the measuring object, the calculation processing section comprising:

a pattern forming section for forming a measurement pattern including a color-coded mark having a position detection pattern for indicating a measurement position and a color code pattern colored with plural colors to allow identification of the mark and located in a predetermined position relative to the position detection pattern;
a pattern projection control section for controlling the projection section to project the measurement pattern; and
a pattern detection section for detecting the position detection pattern and the color code pattern from a photographed image of the measurement pattern projected by the projection section to identify a color code.

# *FIG.1*

FIG.2

P1:RETRO TARGET PART (TARGET DETECTION, CENTER OF GRAVITY DETECTION, ORIENTATION DETECTION, CODE AREA DETECTION)

P2:REFERENCE COLOR PART (BLUE PATTERN)

P2: REFERENCE COLOR PART (RED PATTERN)

P2: REFERENCE COLOR PART (GREEN PATTERN)

*FIG.3A*

CT1

P4: WHITE PART (ORIENTATION DETECTION, COLOR CALIBRATION)

P3: COLOR CODE PART

P1: RETRO TARGET PART (TARGET DETECTION, CENTER OF GRAVITY DETECTION, ORIENTATION DETECTION, CODE AREA DETECTION)

P2: REFERENCE COLOR PART (BLUE PATTERN)

P2: REFERENCE COLOR PART (RED PATTERN)

P2: REFERENCE COLOR PART (GREEN PATTERN)

*FIG.3B*

CT2

P4: WHITE PART (ORIENTATION DETECTION, COLOR CALIBRATION)

P3: COLOR CODE PART

P1: RETRO TARGET PART (TARGET DETECTION, CENTER OF GRAVITY DETECTION, ORIENTATION DETECTION, CODE AREA DETECTION)

P2: REFERENCE COLOR PART (BLUE PATTERN)

P2: REFERENCE COLOR PART (RED PATTERN)

P2: REFERENCE COLOR PART (GREEN PATTERN)

*FIG.3C*

CT3

P3: COLOR CODE PART (9 PARTS)

P4: WHITE PART (ORIENTATION DETECTION, COLOR CALIBRATION)

31

## FIG.4

COLOR IMAGE

41

EXTRACTION SECTION 130

110

SEARCH PROCESSING SECTION 111

RETRO TARGET DETECTION PROCESSING SECTION

131

COLOR-CODED TARGET DETECTION PROCESSING SECTION

COLOR-CODED TARGET AREA / DIRECTION DETECTION PROCESSING SECTION

COLOR DETECTION PROCESSING SECTION — 311

COLOR CORRECTION SECTION — 312

VERIFICATION PROCESSING SECTION — 313

120

RETRO TARGET GROUPING PROCESSING SECTION

140

IMAGE / COLOR PATTERN STORAGE SECTION

READ IMAGE STORAGE SECTION — 141

COLOR-CODED TARGET CORRELATION TABLE — 142

IDENTIFICATION CODE DISCRIMINATION SECTION 46

COORDINATE TRANSFORMATION PROCESSING SECTION 321

CODE CONVERSION PROCESSING SECTION 322

COORDINATE, CODE VALUE

# FIG.5

START

| AFFIX COLOR-CODED TARGETS | S01 |

PHOTOGRAPH — S10

REGISTER IMAGES — S11

EXTRACT CODED TARGETS — S14

DISCRIMINATE IDENTIFICATION CODE — S15

SET STEREO PAIR — S16

SET REFERENCE POINT IN REFERENCE IMAGE CONSTITUTING STEREO IMAGE — S18

DETERMINE CORRESPONDING POINT IN SEARCH IMAGE CONSTITUTING STEREO IMAGE — S19

} S30

CREATE MODEL IMAGE — S42

STORE MODEL IMAGE — S43

DISPLAY MODEL IMAGE ON SCREEN — S44

DETERMINE MATCHING AREA — S45

THREE-DIMENSIONAL MEASUREMENT — S50

END

*FIG.6A*

*FIG.6B*

## FIG.7A

P1 OVERLAPPING PORTION TWO IMAGES

CT

## FIG.7B

FOR BREAK LINE

P1

CODED → TARGET CT

# FIG.8

```
        ┌──────────────────────────┐
        │          START           │
        └──────────────────────────┘
                     │
                     ▼
┌─────────────────────────────────────────────┐  S550
│         LIST NUMBERS OF IMAGES                │
└─────────────────────────────────────────────┘
                     │
                     ▼
┌─────────────────────────────────────────────┐  S560
│ DETERMINE STEREO PAIRS FROM IMAGES INCLUDING  │
│      PLURALITY OF COMMON CODES                │
└─────────────────────────────────────────────┘
                     │
                     ▼
┌─────────────────────────────────────────────┐  S570
│    DETERMINE ARRANGEMENT OF STEREO PAIRS      │
└─────────────────────────────────────────────┘
                     │
                     ▼
        ┌──────────────────────────┐
        │           END            │
        └──────────────────────────┘
```

# FIG.9

*FIG.10A*

CT    COLOR-CODED TARGET

RF    REFERENCE POINT

*FIG.10B*

CT       R F

LEFT IMAGE        RIGHT IMAGE

EP  EPIPOLAR LINE

# FIG.11

AUTOMATIC CORRELATION OF REFERENCE POINTS THROUGH ORIENTATION

S110
MEASURE POSITIONS OF POSITION DETECTION PATTERNS

S120
ORIENTATION (AT TOTAL OF SIX OR MORE POINTS)

S130
CREATE RECTIFIED IMAGE (CREATE CONVERTED IMAGE)

S140
DETECT TARGETS ON (AROUND) EPIPOLAR LINE

S150
CORRELATION BETWEEN LEFT AND RIGHT IMAGES

S160
ORIENTATION

S170
IS ACCURACY OK? — YES → EXIT

NO ↓ S180
REMOVE WORSENING POINT

# FIG.12

```
            ┌────────────────────────────┐
            │           START            │
            └────────────────────────────┘
                          │
                          ▼                              S160
┌────────────────────────────────────────────────────┐
│               DETECT CODED TARGETS                   │
└────────────────────────────────────────────────────┘
                          │
                          ▼                              S170
┌────────────────────────────────────────────────────┐
│        DETECT POSITION DETECTION PATTERNS            │
│              (RETRO TARGET PARTS)                    │
└────────────────────────────────────────────────────┘
                          │
                          ▼                              S180
┌────────────────────────────────────────────────────┐
│ DETERMINE MEASUREMENT RANGE (STEREO MATCHING AREA)   │
│   BASED ON CALCULATED COORDINATES OF POSITION        │
│                DETECTION PATTERNS                     │
└────────────────────────────────────────────────────┘
                          │
                          ▼
            ┌────────────────────────────┐
            │            END             │
            └────────────────────────────┘
```

# FIG.13

COORDINATE OF
UPPER LEFT POINT
(X,Y)=(0,0)

P 1

LINE CONNECTING POINTS
WITH SMALLEST
Y-COORDINATE

CODED TARGET
CT →

LINE CONNECTING POINTS
WITH LARGEST
X-COORDINATE

LINE CONNECTING POINTS
WITH SMALLEST
X-COORDINATE

LINE CONNECTING POINTS
WITH LARGEST
Y-COORDINATE

*FIG.14*

```
                    ┌──────────────┐
                    │    START     │
                    └──────┬───────┘
                           ▼
         ┌─────────────────────────────────────┐
    ┌───►│   INPUT PHOTOGRAPHING CONDITION     │──── S200
    │    └─────────────────┬───────────────────┘
    │                      ▼
    │    ┌─────────────────────────────────────┐
    │    │     CALCULATE CAMERA PARAMETER      │──── S210
    │    └─────────────────┬───────────────────┘
    │                      ▼
    │    ┌─────────────────────────────────────┐
    ├───►│           SET PROJECTOR             │──── S220
    │    └─────────────────┬───────────────────┘
    │                      ▼
    │    ┌─────────────────────────────────────┐
    │    │   PROJECT CAMERA PHOTOGRAPHING      │──── S230
    │    │       RANGE FROM PROJECTOR          │
    │    └─────────────────┬───────────────────┘
    │                      ▼
    │    ┌─────────────────────────────────────┐
    │    │        SET CAMERA POSITION          │──── S240
    │    └─────────────────┬───────────────────┘
    │                      ▼
    │    ┌─────────────────────────────────────┐
    │    │        PROJECT TEXTURE LIGHT        │──── S245
    │    └─────────────────┬───────────────────┘
    │                      ▼
    │    ┌─────────────────────────────────────┐
    │    │        FIRST PHOTOGRAPHING          │──── S250
    │    └─────────────────┬───────────────────┘
    │                      ▼
    │    ┌─────────────────────────────────────┐
    │    │   PREPARATION BEFORE MEASUREMENT    │──── S255
    │    └─────────────────┬───────────────────┘
    │                      ▼
    │    ┌─────────────────────────────────────┐
    │    │   PROJECT COLOR-CODED TARGETS       │──── S260
    │    │      AND REFERENCE POINTS           │
    │    └─────────────────┬───────────────────┘
    │                      ▼
    │    ┌─────────────────────────────────────┐
    │    │        SECOND PHOTOGRAPHING         │──── S270
    │    └─────────────────┬───────────────────┘
    │                      ▼
    │    ┌─────────────────────────────────────┐
    │    │            ORIENTATION              │──── S275
    │    └─────────────────┬───────────────────┘
    │                      ▼
    │    ┌─────────────────────────────────────┐
    │    │   PROJECT MEASUREMENT PATTERN       │──── S280
    │    └─────────────────┬───────────────────┘
    │                      ▼
    │    ┌─────────────────────────────────────┐
    │    │        THIRD PHOTOGRAPHING          │──── S290
    │    └─────────────────┬───────────────────┘
    │                      ▼
    │    ┌─────────────────────────────────────┐
    │    │        SHAPE MEASUREMENT            │──── S295
    │    └─────────────────┬───────────────────┘
    │                      ▼
    │    ┌─────────────────────────────────────┐
    └────│      SHIFT TO NEXT POSITION         │──── S298
         └─────────────────┬───────────────────┘
                           ▼
                    ┌──────────────┐
                    │     END      │
                    └──────────────┘
```

# FIG.15

```
          ┌─────────────────┐
          │      START       │
          └─────────────────┘
                   │
   ┌───────────────────────────────────────┐
   │ PROJECT MEASUREMENT PREPARATION          │ ~ S300
   │ PATTERN FROM PROJECTOR                    │
   └───────────────────────────────────────┘
                   │
   ┌───────────────────────────────────────┐
   │ CHECK DISPLACED POINTS IN PATTERN        │ ~ S310
   └───────────────────────────────────────┘
                   │
   ┌───────────────────────────────────────┐
   │        AFFIX REFERENCE POINTS            │ ~ S320
   │         TO DISPLACED POINTS,             │
   │         OR INCREASE PATTERN              │
   └───────────────────────────────────────┘
                   │
          ┌─────────────────┐
          │       END        │
          └─────────────────┘
```

## FIG.16A

## FIG.16B

# FIG.17

```
                    ┌──────────────┐
                    │    START     │
                    └──────────────┘
                            │
    ┌───────────────────────────────────────────────┐
    │       IMAGE DATA READING PROCESS              │── S500
    └───────────────────────────────────────────────┘
                            │
    ┌───────────────────────────────────────────────┐
    │      RETRO TARGET EXTRACTION PROCESS          │── S510
    └───────────────────────────────────────────────┘
                            │
    ┌───────────────────────────────────────────────┐
    │       RETRO TARGET GROUPING PROCESS           │── S520
    └───────────────────────────────────────────────┘
                            │
    ┌───────────────────────────────────────────────┐
    │         COLOR-CODED TARGET AREA /             │── S530
    │        DIRECTION DETECTION PROCESS            │
    └───────────────────────────────────────────────┘
                            │
    <─────────────── SAME GROUP? ────────────────>  NO
                         │ YES
    ┌───────────────────────────────────────────────┐
    │            CODE IDENTIFICATION                │── S535
    └───────────────────────────────────────────────┘
                            │
    ┌───────────────────────────────────────────────┐
    │          CODE CONVERSION PROCESS              │── S540
    └───────────────────────────────────────────────┘
                            │
    ┌───────────────────────────────────────────────┐
    │   REGISTER CODE OF TARGET FOR EACH IMAGE      │── S545
    └───────────────────────────────────────────────┘
                            │
                    ┌──────────────┐
                    │     END      │
                    └──────────────┘
```

**FIG.18A1**

**FIG.18B1**

200

200

Y

Y

X

X

204
(BRIGHT)

204(BRIGHT)

206(DARK)

206(DARK)

**FIG.18A2**

**FIG.18B2**

BRIGHTNESS

BRIGHTNESS

To
THRESHOLD

To

DISTANCE : X

EP 1 770 356 A2

# *FIG.19*

```
FORM TRIANGLE USING CENTERS OF GRAVITY
OF THREE RETRO TARGETS AS ITS VERTEXES ──── ③
```
S600

```
ONE OF CENTERS OF GRAVITY OF RETRO
TARGETS IS SELECTED AND LABELED AS T1
```
S610

```
REMAINING TWO CENTERS OF GRAVITY
ARE LABELED AS T2 AND T3 CLOCKWISE
```
S612

```
SIDE CONNECTING T1 AND T2 IS LABELED AS
L12, SIDE CONNECTING T2 AND T3 AS L23, AND
SIDE CONNECTING T3 AND T1 AS L31
```
S614

```
WHEN VICINITY OF CENTER OF GRAVITY
T1 IS SCANNED CLOCKWISE FROM
L12 TO L31, ANY CHANGE IN COLOR?
```
NO
YES
S620

S621
YES
```
WHEN VICINITY OF CENTER OF GRAVITY
T2 IS SCANNED CLOCKWISE FROM
L23 TO L12, ANY CHANGE IN COLOR?
```
NO

S623
YES
```
WHEN VICINITY OF CENTER OF GRAVITY
T3 IS SCANNED CLOCKWISE FROM
L31 TO L23, ANY CHANGE IN COLOR?
```
NO

```
CENTER OF GRAVITY T1 IS LABELED
AS R1, T2 AS R2 AND T3 AS R3
```
S630

S622
```
WHEN VICINITY OF CENTER OF GRAVITY
T2 IS SCANNED CLOCKWISE FROM
L23 TO L12, ANY CHANGE IN COLOR?
```
NO
YES
S624
YES
```
WHEN VICINITY OF CENTER OF GRAVITY
T3 IS SCANNED CLOCKWISE FROM
L31 TO L23, ANY CHANGE IN COLOR?
```
NO
S631
```
CENTER OF GRAVITY T2 IS LABELED
AS R1, T3 AS R2 AND T1 AS R3
```

② ① ④

# FIG.20

①    ④    ②

WHEN VICINITY OF CENTER OF GRAVITY T3 IS SCANNED CLOCKWISE FROM L31 TO L23, ANY CHANGE IN COLOR ? —— NO

S625

YES

CENTER OF GRAVITY T3 IS LABELED AS R1, T1 AS R2 AND T2 AS R3

S632

S640

PERFORM COORDINATE TRANSFORMATION USING R1, R2 AND R3 TO OBTAIN DISTORTION-FREE VIEW

S650

ARE WHITE PARTS LOCATED AS DESIGN VALUE? —— NO

YES

COLOR-CODED TARGETS ARE SUCCESSFULLY DETECTED

S655

REFERENCE COLOR PARTS ARE DETECTED — S660

COLOR CODE PARTS ARE DETECTED — S670

COLOR CODES ARE CONVERTED INTO CODES BASED ON DETECTED REFERENCE COLOR PARTS AND COLOR CODE PARTS TO DETERMINE CODES OF CODED TARGETS

S680

S633

GROUPING ERROR OF RETRO TARGETS

THREE NEW RETRO TARGETS ARE SELECTED — S634

③

## FIG.21A

CT1

R 1

R 2

R 3

## FIG.21B

CT1

T 2

T 3

T 1

## FIG.22A

## FIG.22B

# FIG.23

```
                    ┌──────────────┐
                    │    START     │
                    └──────┬───────┘
                           │
    ┌──────────────────────┴──────────────────────┐
    │       PATTERN STORAGE PROCESS                │──S710
    └──────────────────────┬──────────────────────┘
                           │
    ┌──────────────────────┴──────────────────────┐
    │       FIRST PROJECTION PROCESS               │──S720
    └──────────────────────┬──────────────────────┘
                           │
    ┌──────────────────────┴──────────────────────┐
    │       PHOTOGRAPHING PROCESS                  │──S730
    └──────────────────────┬──────────────────────┘
                           │
    ┌──────────────────────┴──────────────────────┐
    │       PATTERN DETECTION PROCESS              │──S740
    └──────────────────────┬──────────────────────┘
                           │
    ┌──────────────────────┴──────────────────────┐
    │    DISPLACEMENT DETECTION PROCESS            │──S750
    └──────────────────────┬──────────────────────┘
                           │
    ┌──────────────────────┴──────────────────────┐
    │       PATTERN FORMING PROCESS                │──S760
    └──────────────────────┬──────────────────────┘
                           │
    ┌──────────────────────┴──────────────────────┐
    │       SECOND PROJECTION PROCESS              │──S770
    └──────────────────────┬──────────────────────┘
                           │
                    ┌──────┴───────┐
                    │     END      │
                    └──────────────┘
```

# FIG.24

```
            ┌─────────────┐
            │    START    │
            └─────────────┘
                   │
                   ▼
   ┌───────────────────────────────────┐
   │    PATTERN FORMING PROCESS        │──── S810
   └───────────────────────────────────┘
                   │
                   ▼
   ┌───────────────────────────────────┐
   │    PATTERN PROJECTION PROCESS     │──── S840
   └───────────────────────────────────┘
                   │
                   ▼
   ┌───────────────────────────────────┐
   │    PHOTOGRAPHING PROCESS          │──── S850
   └───────────────────────────────────┘
                   │
                   ▼
   ┌───────────────────────────────────┐
   │    PATTERN DETECTION PROCESS      │──── S860
   └───────────────────────────────────┘
                   │
                   ▼
            ┌─────────────┐
            │     END     │
            └─────────────┘
```

# *FIG .25*

80A

P

Q

49 CALCULATION PROCESSING SECTION

| PATTERN DETECTION SECTION | 491 |
| PATTERN FORMING SECTION | 492 |
| PATTERN PROJECTION SECTION | 493 |
| COLOR MODIFICATION SECTION | 494 |
| PATTERN STORAGE SECTION | 495 |
| PATTERN SELECTION SECTION | 496 |

10 STEREO CAMERA
(PHOTOGRAPHING SECTION)

12 PROJECTOR
(PROJECTION SECTION)

FIG.26

EP 1 770 356 A2

54

# FIG.27

START

PATTERN STORAGE PROCESS ~S710

FIRST PROJECTION PROCESS ~S720

PHOTOGRAPHING PROCESS ~S730

PATTERN DETECTION PROCESS ~S740

DISPLACEMENT DETECTION PROCESS ~S750

PATTERN SELECTION PROCESS ~S780

THIRD PROJECTION PROCESS ~S790

END

# FIG.28

```
                    ┌──────────────────┐
                    │      START       │
                    └──────────────────┘
                             │
    ┌─────────────────────────────────────────────┐
    │       PATTERN STORAGE PROCESS               │──── S820
    └─────────────────────────────────────────────┘
                             │
    ┌─────────────────────────────────────────────┐
    │      PATTERN SELECTION PROCESS              │──── S830
    └─────────────────────────────────────────────┘
                             │
    ┌─────────────────────────────────────────────┐
    │     PATTERN PROJECTION PROCESS              │──── S840
    └─────────────────────────────────────────────┘
                             │
    ┌─────────────────────────────────────────────┐
    │        PHOTOGRAPHING PROCESS                │──── S850
    └─────────────────────────────────────────────┘
                             │
    ┌─────────────────────────────────────────────┐
    │     PATTERN DETECTION PROCESS               │──── S860
    └─────────────────────────────────────────────┘
                             │
                    ┌──────────────────┐
                    │       END        │
                    └──────────────────┘
```

# FIG.29

```
                    ┌─────────────┐
                    │    START    │
                    └─────────────┘
                           │
    ┌──────────────────────────────────────┐
    │     PHOTOGRAPH MEASUREMENT            │
    │     PREPARATION PATTERN,              │ ~ S311
    │     AND SEND IMAGE TO PATTERN         │
    │     DETECTION SECTION                 │
    └──────────────────────────────────────┘
                           │
    ┌──────────────────────────────────────┐
    │  DETECT CENTER OF GRAVITY OF PATTERN  │ ~ S312
    │        ON PHOTOGRAPHED IMAGE          │
    └──────────────────────────────────────┘
                           │
    ┌──────────────────────────────────────┐
    │      OBTAIN CORRESPONDING POINTS      │ ~ S313
    └──────────────────────────────────────┘
                           │
    ┌──────────────────────────────────────┐
    │        ORIENTATION CALCULATION        │ ~ S314
    └──────────────────────────────────────┘
                           │                    ~ S315a
    <──────────────────────────────────────>  NO          S315
    <               OK?                      >
    <──────────────────────────────────────>
                         │ YES                ┌───────────────────────────┐
         S316            │                    │  REMOVE INACCURATE POINT   │
    ┌──────────────────────────────────────┐ └───────────────────────────┘
    │  AFFIX REFERENCE POINTS TO DISPLACED  │
    │     POINTS, OR INCREASE PATTERN       │
    └──────────────────────────────────────┘
                           │
                    ┌─────────────┐
                    │     END     │
                    └─────────────┘
```

# FIG.30

```
┌──────────────────────┐
│        START         │
└──────────────────────┘
           │
           ▼
┌──────────────────────────────────────┐
│  DEFINE MEASUREMENT AREA SO AS TO      │──S317
│ INCLUDE OUTERMOST REFERENCE POINTS     │
└──────────────────────────────────────┘
           │
           ▼
┌──────────────────────────────────────┐
│           STEREO MATCHING              │──S318
└──────────────────────────────────────┘
           │
           ▼
┌──────────────────────────────────────┐
│        PROJECT MISMATCHING AREA        │──S319
└──────────────────────────────────────┘
           │
           ▼
┌──────────────────────────────────────┐
│         AFFIX REFERENCE POINTS         │──S319a
│          TO MISMATCHING AREA,          │
│           OR INCREASE PATTERN          │
└──────────────────────────────────────┘
           │
           ▼
┌──────────────────────┐
│         END          │
└──────────────────────┘
```

**EP 1 770 356 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2005289332 A
- JP 2005289333 A